(19) Europäisches Patentamt
European Patent Office
Office européen des brevets

(11) EP 1 582 569 A1

(12) **EUROPÄISCHE PATENTANMELDUNG**

(43) Veröffentlichungstag:
**05.10.2005 Patentblatt 2005/40**

(51) Int Cl.[7]: **C09D 11/00**

(21) Anmeldenummer: **04405184.5**

(22) Anmeldetag: **25.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(71) Anmelder: **ILFORD Imaging Switzerland GmbH
1723 Marly 1 (CH)**

(72) Erfinder:
- **Kriebel, Arnd
1723 Marly (CH)**
- **Gremaud, Jean-Luc
1726 Farvagny (CH)**

Bemerkungen:
Geänderte Patentansprüche gemäss Regel 86 (2) EPÜ.

(54) **Tintensatz für den Tintenstrahldruck**

(57) Tintensatz für den Tintenstrahldruck bestehend aus mindestens einer Gelbtinte, mindestens einer Purpurtinte, mindestens einer Blaugrüntinte und mindestens einer Schwarztinte, dadurch gekennzeichnet, dass die Purpurtinte als erste Farbstoffkomponente mindestens einen Farbstoff der allgemeinen Formel (I)

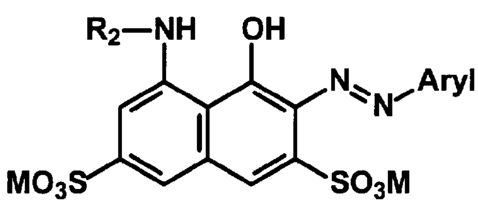

(I)

worin $R_2$ und Aryl die in der Beschreibung angegebene Bedeutung haben, oder der allgemeinen Formel (II)

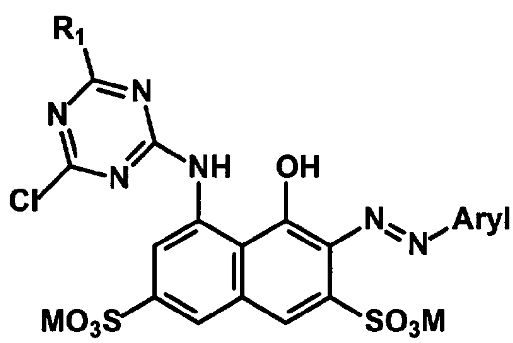

,

worin M, $R_1$, und Aryl die in der Beschreibung angegebene Bedeutung haben

EP 1 582 569 A1

und als zweite Farbstoffkomponente mindestens einen Kupferkomplex-Azofarbstoff der allgemeinen Formel (III)

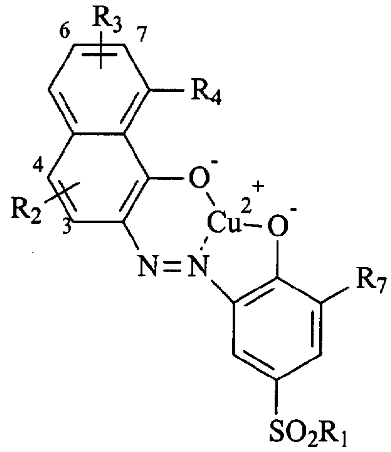

(III)

oder der allgemeinen Formel (IV)

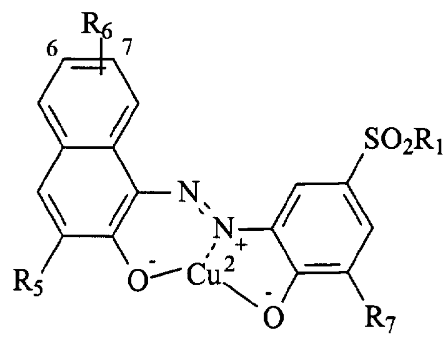

(IV)

worin M, $R_1$, $R_2$, $R_3$, $R_4$, $R_5$, $R_6$ und $R_7$ die in der Beschreibung angegebene Bedeutung haben, enthält.

## Beschreibung

### Technisches Gebiet

Die vorliegende Erfindung bezieht sich auf Tintensätze auf wässriger Basis im Tintenstrahldruck, die in den Purpurtinten als erste Farbstoffkomponente mindestens einen metallfreien Azofarbstoff mit einer H-Säure-Komponente im Molekül und als zweite Farbstoffkomponent mindestens einen Kupferkomplex-Azofarbstoff enthalten.

### Stand der Technik

Das Tintenstrahldruckverfahren hat bereits auf vielen Gebieten klassische Bildwiedergabeverfahren wie die Fotografie auf Silberhalogenidmaterialien, den Offsetdruck sowie den Siebdruck abgelöst oder ergänzt. Es findet Anwendung im Bürobereich, im Fotobereich, im grafischen Bereich, vor allem im Proofing, bei der Herstellung von gefärbten Textilien oder in der Industrie. In diesem Verfahren werden kleinste Tintentröpfchen unter Verwendung digital gespeicherter Bildinformationen durch die Düsen eines Druckkopfes auf die zu bedruckende Unterlage aufgebracht. Die dabei verwendeten Tinten bestehen aus Lösungen von farbigen oder schwarzen Farbstoffen oder aus Dispersionen farbiger oder schwarzer Pigmente in einem flüssigen Dispersionsmittel. Die Lösungs- oder Dispergiermittel bestehen je nach verwendetem Farbstoff- oder Pigmenttyp aus Wasser, aus Mischungen von Wasser mit wasserlöslichen organischen Lösungsmitteln, aus Mischungen ausschliesslich organischer Lösungsmittel, aus Ölen oder hydrophoben organischen Lösungsmitteln.
Das Tintenstrahldruckverfahren hat einen beachtlichen Reifegrad erreicht, aber für hochwertige Anwendungen im grafischen Bereich und im Fotobereich sind weitere Verbesserungen nötig. In diesen Bereichen spielen die Lichtbeständigkeit und ein grosses Volumen des Farbraums (Gamut) eine entscheidende Rolle. Beide Eigenschaften werden von der Natur der verwendeten Farbstoffe oder Pigmente entscheidend beeinflusst. Pigmente besitzen im allgemeinen eine bessere Lichtbeständigkeit als lösliche Farbstoffe. Dagegen haben im allgemeinen Farbstoffe ein höhere Brillanz, d. h. leuchtendere Farben. Pigmente haben zudem die Tendenz, auf der Oberfläche der bedruckten Unterlage zu bleiben und dadurch den Glanz der Oberfläche zu vermindern. Das ist vor allem bei fotografischen Anwendungen des Tintenstrahldrucks unerwünscht.
Bei Verwendung von Farbstofftinten bestehen bisher eindeutig bessere Möglichkeiten zur Wiedergabe brillanter Farben. Für Anwendungen, die eine hohe Farbbrillanz erfordern, werden deshalb vorzugsweise Tinten verwendet, die Farbstoffe an Stelle von Pigmenten enthalten. Im allgemeinen besteht bei Verwendung von farbstoffhaltigen Tinten auch ein Kostenvorteil, da Farbstoffe meistens billiger als Pigmente sind.
In Tintensätzen für anspruchsvolle Anwendungen wie in der Grafik, im Fotobereich oder im Proofing werden deshalb möglichst brillante Farbstoffe verwendet, die neben einer guten Wasserbeständigkeit und einer hohen Diffusionsfestigkeit eine möglichst hohe Lichtbeständigkeit aufweisen müssen.
Der einfachste Tintensatz besteht aus einer Gelbtinte, einer Purpurtinte, einer Blaugrüntinte und einer Schwarztinte. Mit diesen drei farbigen Tinten (Primärfarben) können durch Überlagerung auch die sekundären Farben wie Rot, Blau und Grün und alle Zwischenfarbtöne erzeugt werden.
Tinten für den Tintenstrahldruck müssen hohen Anforderungen genügen. Sie müssen ausgezeichnete Eigenschaften bezüglich chemischer und physikalischer Stabilität, Toxizität und Rheologie aufweisen. Im Druckkopf dürfen sie die Druckkopfmaterialien nicht angreifen, sie dürfen die Düsenöffnungen nicht verstopfen und keine Ablagerungen auf den Heizelementen thermischer Druckköpfe bilden. Auf dem Aufzeichnungsmaterial müssen die Tinten jedoch schnell trocknen, die Farbstoffe dürfen beispielsweise nicht diffundieren, sie müssen lichtbeständig sein, sie dürfen bei Lagerung des hergestellten Bildes in verunreinigter Luft nicht ausbleichen oder sich verfärben, sie dürfen den Glanz des Aufzeichnungsmaterials nicht vermindern und sie dürfen die Laminierung solcher bedruckter Aufzeichnungsmaterialien nicht stören. Durch diese hohen Anforderungen wird die Auswahl geeigneter Farbstoffe für den qualitativ hoch stehenden Tintenstrahldruck stark eingeschränkt. Nur sehr wenige aller bekannten Farbstoffe erfüllen diese Anforderungen des qualitativ hoch stehenden Tintenstrahldrucks einigermassen. Es gibt wahrscheinlich keinen einzigen Farbstoff, der alle Anforderungen vollständig erfüllt.

Die besten wasserlöslichen Purpurfarbstoffe für den Tintenstrahldruck findet man unter den γ-Säure-Azofarbstoffen, den H-Säure-Azofarbstoffen und den Kupferkomplex-Azofarbstoffen.

Metallfreie Azofarbstoffe, die im Molekül eine γ-Säure-Komponente enthalten, werden beispielsweise in den Patentanmeldungen WO 96/24'636, EP 0'755'984 und EP 1'160'291 beschrieben. Diese Farbstoffe zeigen zwar eine sehr gute Lichtechtheit auf Aufzeichnungsmaterialien auf Polymerbasis. Auf nanoporösen Aufzeichnungsmaterialien lassen ihre Beständigkeit in verunreinigter Aussenluft sowie ihre Lichtechtheit aber zu wünschen übrig.

Metallfreie Azofarbstoffe, die im Molekül eine H-Säure-Komponente enthalten, werden beispielsweise in den Patentanmeldungen EP 0'918'074, EP 1'219'682 und EP 1'367'098 beschrieben. In dieser Farbstoffklasse findet man die Purpurfarbstoffe mit der höchsten Brillanz. Auf nanoporösen Aufzeichnungsmaterialien weisen sie zudem eine gute

Lichtechtheit und eine gute Beständigkeit in verunreinigter Aussenluft auf. Auf Aufzeichnungsmaterialien auf Polymerbasis ist ihre Lichtbeständigkeit aber geringer als die der Purpurfarbstoffe mit einer γ-Säure-Komponente und der im folgenden erwähnten Kupferkomplex-Azofarbstoffe.

Metallkomplex-Azofarbstoffe können ebenfalls verwendet werden. Das bevorzugte Metall ist Kupfer. Solche kupferhaltigen Farbstoffe werden beispielsweise in den Patentanmeldungen EP 1'086'993, EP 1'086'999 und EP 1'403'328 beschrieben. Diese Farbstoffe zeigen eine sehr gute Lichtbeständigkeit auf Aufzeichnungsmaterialien auf Polymerbasis wie auch auf nanoporösen Aufzeichnungsmaterialien, sowie auf nanoporösen Aufzeichnungsmaterialien eine gute Beständigkeit in verunreinigter Aussenluft. Dagegen ist ihre Brillanz im Vergleich zu den oben erwähnten Farbstoffen mit einer γ-Säure-Komponente oder einer H-Säure-Komponente im Molekül im allgemeinen schlechter.
Nickelkomplexfarbstoffe werden in der Patentanmeldung EP 0'902'064 beschrieben. Aus ökologischer und toxikologischer Sicht sind diese Farbstoffe aber bedenklich.

## Beschreibung der Erfindung

Ziel der Erfindung ist die Bereitstellung von Tintensätzen für den hochqualitativen Tintenstrahldruck bei Verwendung von Aufzeichnungsmaterialien auf Polymerbasis oder von nanoporösen Aufzeichnungsmaterialien, in denen die Purpurtinten verbesserte Eigenschaften aufweisen. Dieses Ziel wird durch Purpurtinten erreicht, die als erste Farbstoffkomponente mindestens einen metallfreien Azofarbstoff mit einer H-Säure-Komponente im Molekül und als zweite Farbstoffkomponente mindestens einen Kupferkomplex-Azofarbstoff enthalten. Es ist wichtig, dass der metallfreie Azofarbstoff mit einer H-Säure-Komponente im Molekül mit Kupferionen keine starken Kupferkomplexe bilden kann, da sonst die Brillanz des metallfreien Azofarbstoffs mit einer H-Säurekomponente im Molekül erniedrigt wird. Bevorzugt bildet der metallfreie Azofarbstoff mit einer H-Säure-Komponente im Molekül überhaupt keine stabilen Kupferkomplexe.
Mit den erfindungsgemässen Purpurtinten erhält man eine gute Lichtechtheit bei hoher Brillanz sowie eine verbesserte Stabilität auf nanoporösen Aufzeichnungsmaterialien in verunreinigter Aussenluft.

Das Mischungsverhältnis zwischen der ersten Farbstoffkomponente (metallfreier Azofarbstoff mit einer H-Säure-Komponente im Molekül) und der zweiten Farbstoffkomponente (Kupferkomplex-Azofarbstoff) liegt dabei zwischen 1 : 100 und 100 : 1. Innerhalb dieses Mischungsverhältnisses können alle Farbtöne zwischen denen der beiden reinen Farbstoffe erzeugt werden.
Farben werden sehr oft durch ihre Lage im Farbraum beschrieben. Heute wird meist das (L* a* b*)-System von CIE (1976) verwendet. Eine Definition findet sich beispielsweise auf Seite 829 des Buches von G. Wyszecki und W. S. Stiles, "Color Science: Concepts and Methods, Quantitative Data and Formulae", 2. Auflage, Wiley-Interscience (1982), ISBN 0-471-02106-7. Dieses System wird in der weiteren Beschreibung der Erfindung verwendet.

## Ausführliche Beschreibung der Erfindung

Die Erfindung bezieht sich auf Tintensätze zum Drucken farbiger Bilder auf kommerziell erhältlichen Tintenstrahldruckern wie Desktop-Druckern oder Weitformatdruckern. Alle Typen von Tintenstrahldruckern können verwendet werden, wie beispielsweise thermische Tintenstrahldrucker (Bubble Jet), Piezo-Drucker oder kontinuierliche Tintenstrahldrucker (Continuous Ink Jet).
Solche Tintensätze bestehen mindestens aus einer Gelbtinte, einer Purpurtinte, einer Blaugrüntinte und einer Schwarztinte. Es ist auch möglich, zusätzlich solche Tinten mit niedrigerer Farbstoffkonzentration zu verwenden. Dadurch wird eine bessere Wiedergabe von dunklen und hellen Bildstellen erreicht. Es ist auch möglich, zusätzlich Tinten mit anderer Farbe hinzuzufügen, um die Farbwiedergabe zu verbessern.

Geeignete Farbstoffe für die erste Farbstoffkomponente der Purpurtinte der erfindungsgemässen Tintensätze werden beispielsweise in den Patentanmeldungen EP 0'918'074, EP 1'219'682 und EP 1'367'098 beschrieben.

Bevorzugt werden als Azofarbstoffe mit einer H-Säure-Komponente im Molekül die Farbstoffe der allgemeinen Formel (I) verwendet

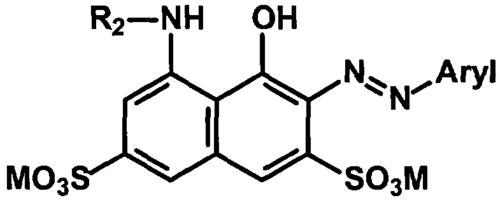

,

(I)

worin

M für Wasserstoff, ein Metallkation oder ein Ammoniumkation steht;

$R_2$ für $NHCOD_1$ steht, worin

$D_1$ unsubstituiertes oder substituiertes Alkyl, wobei die Substituenten aus der Gruppe bestehend aus $OCH_3$ und COOM ausgewählt werden; unsubstituiertes Phenyl oder mit $CH_3$, Cl, Br, OH oder COOM substituiertes Phenyl oder

$NHSO_2D_2$ steht, worin

$D_2$ unsubstituiertes Alkyl, unsubstituiertes Phenyl oder mit $CH_3$, F, Cl oder Br substituiertes Phenyl bedeutet

und

Aryl für unsubstituiertes Phenyl oder mit $CH_3$, Cl, Br, COOM oder $SO_3M$ substituiertes Phenyl oder unsubstituiertes Naphthyl oder mit COOM oder $SO_3M$ substituiertes Naphthyl steht.

oder

die Farbstoffe der allgemeinen Formel (II) verwendet

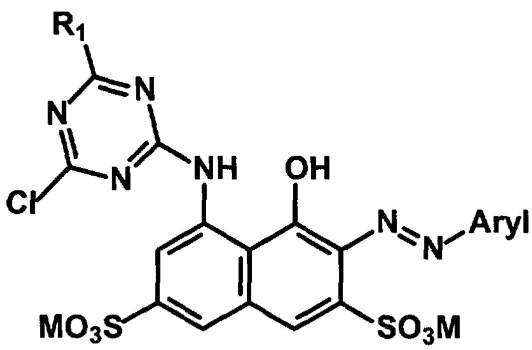

,

(II)

worin

M für Wasserstoff, ein Metallkation oder ein Ammoniumkation steht;

$R_1$ für $NR_3R_4$ steht, worin

$R_3$ und $R_4$ unabhängig voneinander Wasserstoff; Alkyl, substituiertes Alkyl, wobei die Substituenten aus der Gruppe bestehend aus OH, $OCH_3$, COOM und $SO_3M$ ausgewählt werden; Aralkyl; unsubstituiertes Aryl oder substituiertes Aryl, wobei die Substituenten aus der Gruppe bestehend aus $OCH_3$, Cl, Br, COOM und $SO_3M$ ausgewählt werden; bedeuten

oder

für $OR_5$ steht, worin

$R_5$ Wasserstoff oder Alkyl bedeutet
oder
für $SR_6$ steht, worin
$R_6$ Alkyl oder mit COOM, OH oder $SO_3M$ substituiertes Alkyl bedeutet

und

Aryl für unsubstituiertes Phenyl oder mit $CH_3$, Cl, Br, COOM oder $SO_3M$ substituiertes Phenyl oder für unsubstituiertes Naphthyl oder mit COOM oder $SO_3M$ substituiertes Naphthyl steht.

Besonders bevorzugt sind der Farbstoff "Purpur H1" der Formel

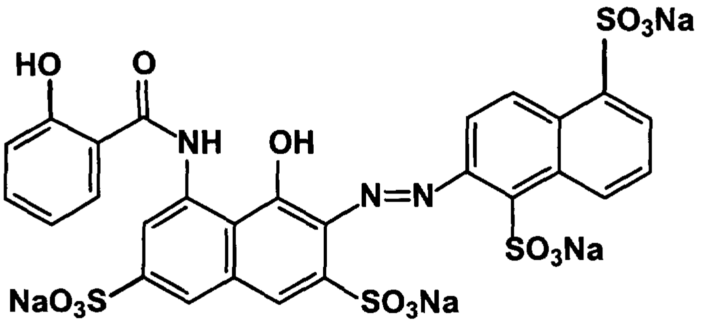

Purpur H1

sowie der Farbstoff "Purpur H2" der Formel

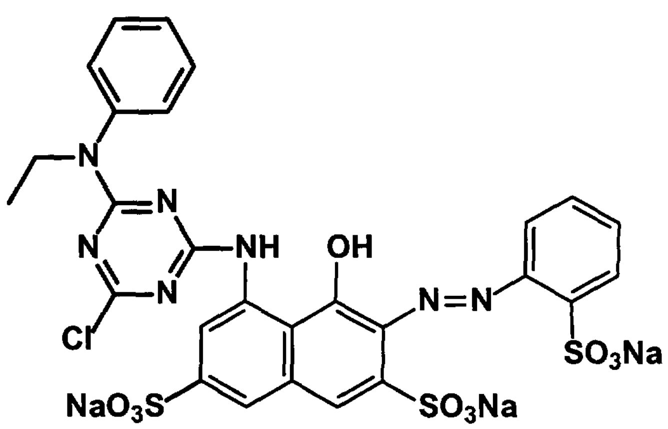

Purpur H2

oder ein Gemisch dieser Farbstoffe.

Bevorzugt werden als zweite Farbstoffkomponente in der Purpurtinte die in der Patentanmeldung EP 1'403'328 beschriebenen Kupferkomplex-Azofarbstoffe der allgemeinen Formel (III)

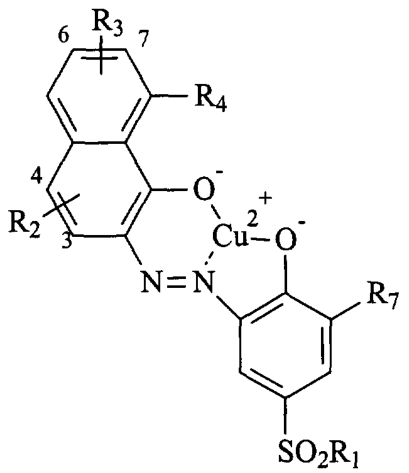

(III)

und der allgemeinen Formel (IV) verwendet,

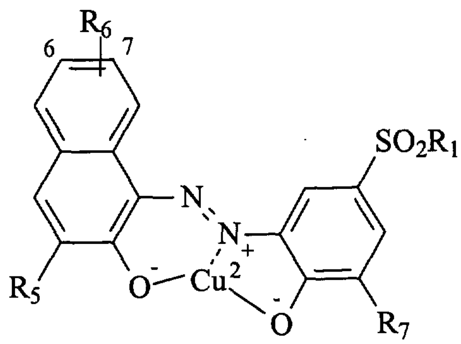

(IV)

worin

- M für Wasserstoff, ein Metallkation oder ein gegebenenfalls substituiertes Ammoniumkation steht;
- $R_1$ für Alkyl mit 1 bis 4 Kohlenstoffatomen, substituiertes Alkyl mit 2 bis 4 Kohlenstoffatomen, wobei die Substituenten aus der Gruppe bestehend aus OH und $OSO_3$ ausgewählt werden; oder Alkenyl mit 2 bis 4 Kohlenstoffatomen steht;
- $R_2$ für Wasserstoff oder $SO_3M$ steht;
- $R_3$ für Wasserstoff, $SO_3M$, $NH_2$, $NHCOD_1$, wobei $D_1$ unsubstituiertes oder substituiertes Alkyl mit 1 bis 6 Kohlenstoffatomen, wobei die Substituenten aus der Gruppe bestehend aus COOM, Cl und Br ausgewählt werden, bedeutet; unsubstituiertes Phenyl oder mit $CH_3$, Cl, Br, OH, COOM oder $SO_3M$ substituiertes Phenyl oder $NHSO_2D_2$, steht, wobei $D_2$ unsubstituiertes Alkyl mit 1 bis 6 Kohlenstoffatomen, unsubstituiertes Phenyl oder mit $CH_3$, F, Cl oder Br substituiertes Phenyl bedeutet;
- $R_4$ für Wasserstoff, $SO_3M$, $NH_2$, $NHSO_2D_3$, wobei $D_3$ Alkyl mit 1 bis 6 Kohlenstoffatomen bedeutet; unsubstituiertes Phenyl oder mit $CH_3$, F, Cl oder Br substituiertes Phenyl steht;
- $R_5$ für Wasserstoff, $SO_3M$, COOM oder $COND_4D_5$ steht, wobei $D_4$ und $D_5$ unabhängig voneinander Wasserstoff, unsubstituiertes oder substituiertes Alkyl mit 1 bis 6 Kohlenstoffatomen, wobei die Substituenten aus der Gruppe bestehend aus $OCH_3$, $OC_2H_5$, iso-$OC_3H_7$ und OH ausgewählt werden; bedeuten;
- $R_6$ für Wasserstoff oder $SO_3M$ steht

und

$R_7$ für Wasserstoff oder $SO_3M$ steht.

Besonders bevorzugt sind der Kupferkomplex-Azofarbstoff "Purpur K1" der Formel

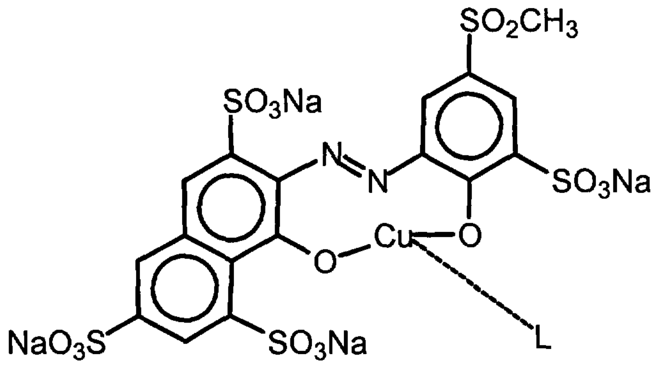

,

Purpur K1

der Kupferkomplex-Azofarbstoff "Purpur K2" der Formel

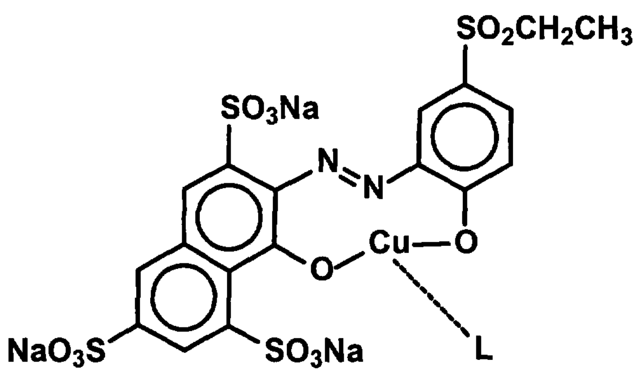

,

Purpur K2

der Kupferkomplex-Azofarbstoff "Purpur K3" der Formel

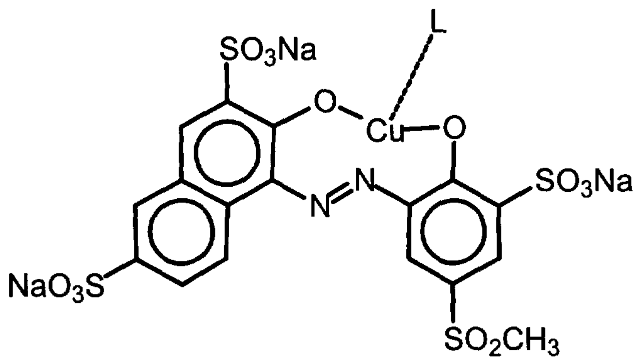

,

Purpur K3

der Kupferkomplex-Azofarbstoff "Purpur K4" der Formel

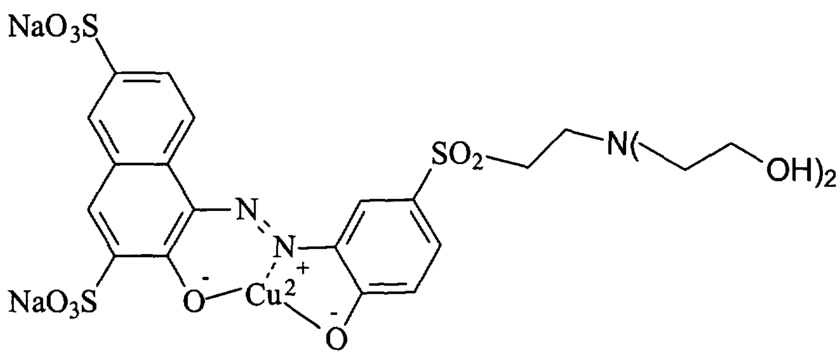

Purpur K4

sowie der Kupferkomplex-Azofarbstoff "Reaktivrot 23" der Formel

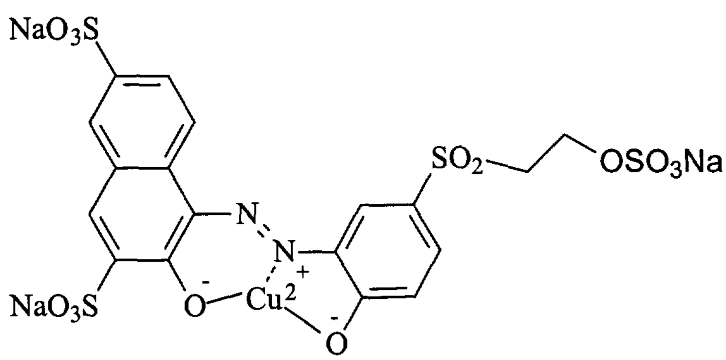

Reaktivrot 23

oder ein Gemisch dieser Farbstoffe, wobei L überall einen Kupferliganden wie beispielsweise 2-Aminoethanol bedeutet.

Bevorzugt ist ein Tintensatz bestehend aus einer Gelbtinte, einer Purpurtinte, einer Blaugrüntinte und einer Schwarztinte, der in der Purpurtinte als erste Farbstoffkomponente mindestens einen Azofarbstoff der allgemeinen Formeln (I) oder (II) und als zweite Farbstoffkomponente mindestens einen Kupferkomplex-Azofarbstoff der allgemeinen Formeln (III) oder (IV) enthält.

Besonders bevorzugt ist ein Tintensatz bestehend aus einer Gelbtinte, einer Purpurtinte, einer Blaugrüntinte und einer Schwarztinte, der in der Purpurtinte als erste Farbstoffkomponente den Farbstoff "Purpur H1", den Farbstoff "Purpur H2" oder ein Gemisch dieser Farbstoffe und als zweite Farbstoffkomponente den Farbstoff "Purpur K1", den Farbstoff "Purpur K2", den Farbstoff "Purpur K3", den Farbstoff "Purpur K4", den Farbstoff "Reaktivrot 23" oder ein Gemisch dieser Farbstoffe enthält.

Geeignete Farbstoffe für die Gelbtinte der erfindungsgemässen Tintensätze werden beispielsweise in der Patentanmeldung EP 0'755'984 beschrieben. Solche Gelbtinten enthalten mindestens einen Farbstoff der allgemeinen Formel (V)

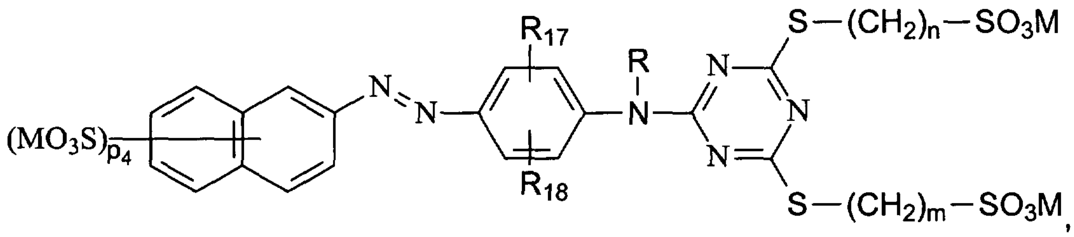

(V)

worin

R für Wasserstoff oder Alkyl mit 1 bis 6 Kohlenstoffatomen steht;
M für Wasserstoff, ein Metallkation oder ein gegebenenfalls substituiertes Ammoniumkation steht;
$R_{17}$, $R_{18}$ unabhängig voneinander für Wasserstoff, Alkyl oder Alkoxyl mit jeweils 1 bis 3 Kohlenstoffatomen stehen;
$p_4$ einen Wert zwischen 1 und 3 annimmt und die $SO_3M$-Gruppe in Stellung 1, 4, 5, 6, 7 oder 8 steht, wenn $p_4$ den Wert 1 hat; die $SO_3M$- Gruppen in den Stellungen 4 und 8, 5 und 7, 6 und 8 oder 1 und 5 stehen, wenn $p_4$ den Wert 2 hat; oder die $SO_3M$-Gruppen in den Stellungen 3, 6 und 8 oder 4, 6 und 8 stehen, wenn $p_4$ den Wert 3 hat

und

n, m unabhängig voneinander einen Wert zwischen 2 und 6 annehmen,

oder der allgemeinen Formel (VI)

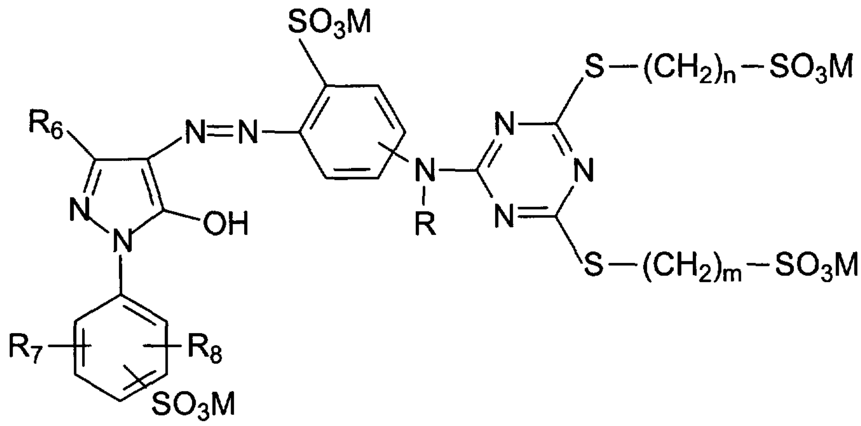

,

(VI)

worin

| | |
|---|---|
| R | für Wasserstoff oder Alkyl mit 1 bis 6 Kohlenstoffatomen steht; |
| M | ür Wasserstoff oder ein Metallkation oder ein gegebenenfalls substituiertes Ammoniumkation steht; |
| $R_6$ | für $CH_3$ oder COOM steht; |
| $R_7$, $R_8$ | unabhängig voneinander für Wasserstoff, Cl, Br oder $CH_3$ stehen |

und

n, m unabhängig voneinander einen Wert zwischen 2 und 6 annehmen.

Besonders geeignet sind der Farbstoff "Gelb 1"

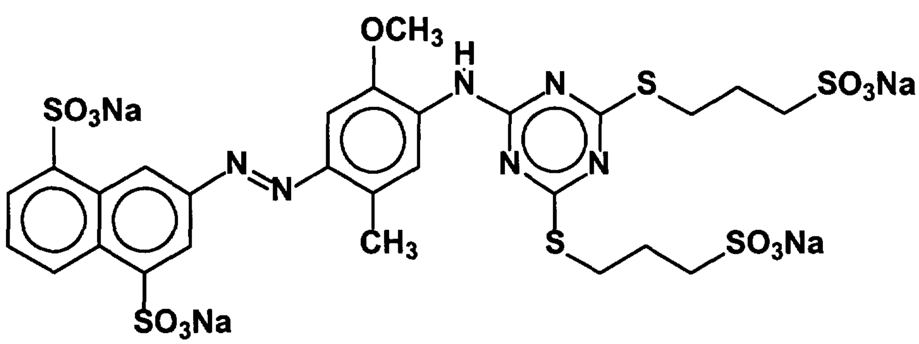

,

Gelb 1

der Farbstoff "Gelb 2"

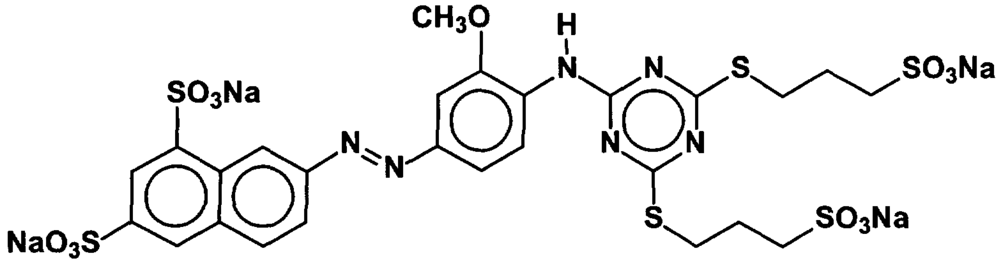

Gelb 2

sowie der Farbstoff "Gelb 3"

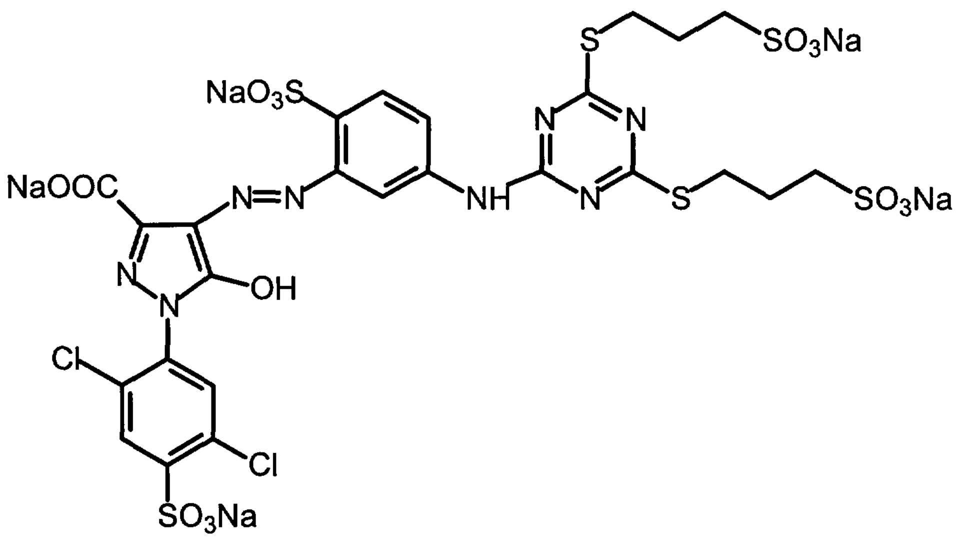

Gelb 3

oder ein Gemisch dieser Farbstoffe.

Bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente mindestens einen Azofarbstoff der allgemeinen Formeln (I) oder (II) und als zweite Farbstoffkomponente mindestens einen Kupferkomplex-Azofarbstoff der allgemeinen Formeln (III) oder (IV) und in der Gelbtinte einen Gelbfarbstoff der allgemeinen Formeln (V) oder (VI) enthält.

Bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente den Farbstoff "Purpur H1", den Farbstoff "Purpur H2" oder ein Gemisch dieser Farbstoffe und als zweite Farbstoffkomponente den Farbstoff "Purpur K1", den Farbstoff "Purpur K2", den Farbstoff "Purpur K3", den Farbstoff "Purpur K4", den Farbstoff "Reaktivrot 23" oder ein Gemisch dieser Farbstoffe und in der Gelbtinte den Farbstoff "Gelb 1 ", den Farbstoff "Gelb 2", den Farbstoff "Gelb 3" oder ein Gemisch dieser Farbstoffe enthält.

In Blaugrüntinten für den Tintenstrahldruck werden im allgemeinen Kupferphthalocyanin-Farbstoffe eingesetzt.

Ein besonders geeigneter Farbstoff für die Blaugrüntinte der erfindungsgemässen Tintensätze ist der Farbstoff "Direktblau 199" der Formel

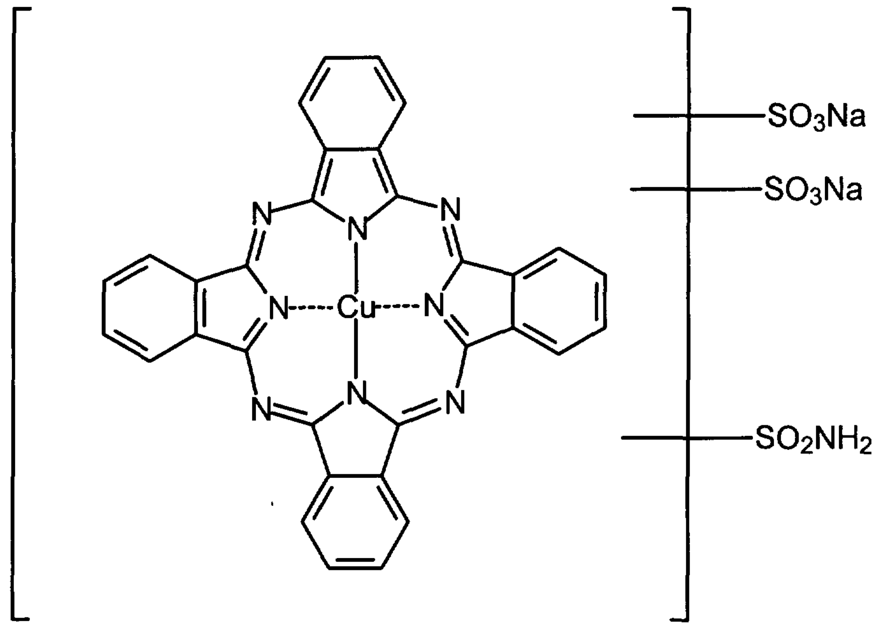

Direktblau 199

Andere substituierte Kupferphthalocyanine, mit unterschiedlicher Anzahl und Lage der Substituenten im Molekül, können ebenfalls verwendet werden.

Bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente mindestens einen Azofarbstoff der allgemeinen Formeln (I) oder (II) und als zweite Farbstoffkomponente mindestens einen Kupferkomplex-Azofarbstoff der allgemeinen Formeln (III) oder (IV) und in der Blaugrüntinte den Farbstoff "Direktblau 199" enthält.

Besonders bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente den Farbstoff "Purpur H1", den Farbstoff "Purpur H2" oder ein Gemisch dieser Farbstoffe und als zweite Farbstoffkomponente den Farbstoff "Purpur K1", den Farbstoff "Purpur K2", den Farbstoff "Purpur K3", den Farbstoff "Purpur K4", den Farbstoff "Reaktivrot 23" oder ein Gemisch dieser Farbstoffe und in der Blaugrüntinte den Farbstoff "Direktblau 199" enthält.

Geeignete Farbstoffe für die Schwarztinte der erfindungsgemässen Tintensätze werden beispielsweise in den Patentanmeldungen EP 0'859'033, EP 0'924'263 und EP 0'982'371 sowie im Patent CH 692'580 beschrieben. Besonders bevorzugt sind der Farbstoff "Schwarz 1" der Formel

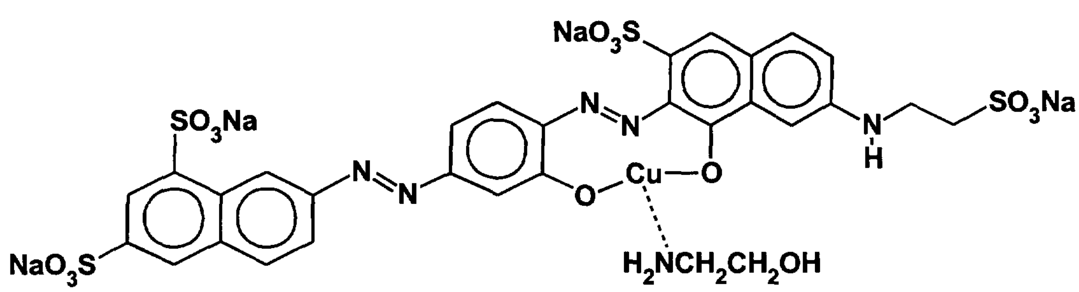

,

Schwarz 1

der Farbstoff "Schwarz 2" der Formel

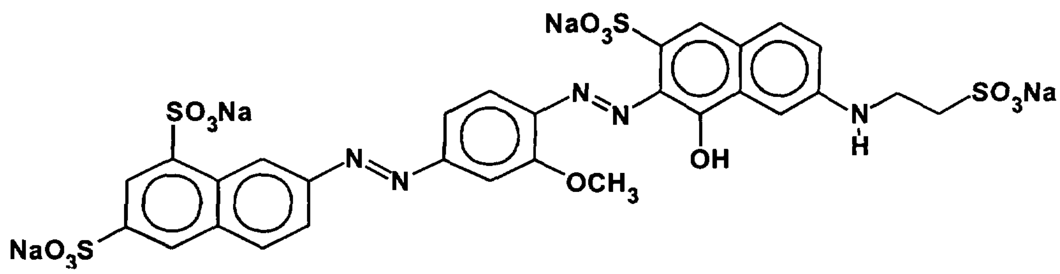

Schwarz 2

sowie der Farbstoff "Reaktivschwarz 31" der Formel

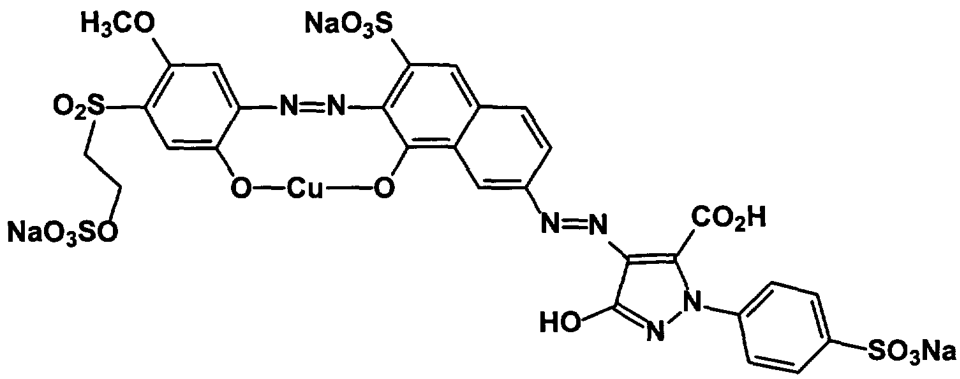

Reaktivschwarz 31

Bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente mindestens einen Azofarbstoff der allgemeinen Formeln (I) oder (II) und als zweite Farbstoffkomponente mindestens einen Kupferkomplex-Azofarbstoff der allgemeinen Formeln (III) oder (IV) und in der Schwarztinte einen der Farbstoffe "Schwarz 1 ", Schwarz 2", "Reaktivschwarz 31" oder ein Gemisch dieser Farbstoffe enthält.

Besonders bevorzugt ist ein erfindungsgemässer Tintensatz bestehend aus einer Gelbtinte, einer Purpurtinte, einer Blaugrüntinte und einer Schwarztinte, der in der Purpurtinte als erste Farbstoffkomponente den Farbstoff "Purpur H1", den Farbstoff "Purpur H2" oder ein Gemisch dieser Farbstoffe und als zweite Farbstoffkomponente den Farbstoff "Purpur K1", den Farbstoff "Purpur K2", den Farbstoff "Purpur K3", den Farbstoff "Purpur K4", den Farbstoff "Reaktivrot 23" oder ein Gemisch dieser Farbstoffe und in der Schwarztinte einen der Farbstoffe "Schwarz 1", Schwarz 2", "Reaktivschwarz 31" oder ein Gemisch dieser Farbstoffe enthält.

Aufzeichnungsmaterialien für den hoch qualitativen Tintenstrahldruck bestehen im allgemeinen aus einem Träger, wie beispielsweise polyethylenbeschichtetes Papier oder weissopaker Polyester, auf den auf der Vorderseite eine Tintenaufnahmeschicht und auf der Rückseite gegebenenfalls eine Rückschicht zur Verbesserung der Planlage aufgebracht worden ist.

Bei Aufzeichnungsmaterialien auf Polymerbasis besteht die Tintenaufnahmeschicht sehr oft im Wesentlichen aus einer Mischung eines Polymers wie Polyvinylpyrrolidon oder Carboxymethylcellulose oder einer Mischung solcher Polymere mit Gelatine. Bei diesen Aufzeichnungsmaterialien werden die Tinten relativ langsam in die Tintenaufnahmeschicht aufgenommen wird, da das Eindringen von der Quellung der Tintenaufnahmeschicht abhängig ist. Für Fotofinishing-Anwendungen sind diese Aufzeichnungsmaterialien daher wenig geeignet, da diese Anwendung eine schnelle Trocknung des bedruckten Aufzeichnungsmaterials erfordert.

Besser geeignet für die Fotofinishing-Anwendung sind Aufzeichnungsmaterialien mit Tintenaufnahmeschichten, die nanokristalline, nanoporöse anorganische Verbindungen enthalten. Hier wird die aufgetragene Tinte sofort durch die Wirkung der Kapillarität der nanokristallinen, nanoporösen anorganischen Verbindungen, wie beispielsweise AlOOH oder $SiO_2$, aufgesaugt, ohne dass ein Quellen der Tintenaufnahmeschichten notwendig wäre.

Die erfindungsgemässen Purpurtinten sowie die dazugehörigen Tintensätze ergeben sowohl auf polymerbeschichteten wie auch auf nanoporösen Aufzeichnungsmaterialien ausgezeichnete Ergebnisse.

Die erfindungsgemässen Tinten enthalten wie üblich neben dem Hauptbestandteil Wasser wasserlösliche organische Lösungsmittel. Ein solches Lösungsmittel muss mit den Farbstoffen und den anderen Bestandteilen der Tinte kompatibel sein, d. h. es darf weder Niederschläge bilden noch chemische Reaktionen eingehen. Die Lösungsmittel können allein oder als Mischungen eingesetzt werden. Bevorzugt sind jedoch Tinten, die möglichst wenig verschiedene Lösungsmittel enthalten. Diese Lösungsmittel können in Mengen bis 80 Gewichtsprozent bezogen auf die Gesamtmenge in der Tinte enthalten sein, bevorzugt sind aber möglichst kleine Mengen bis 30 Gewichtsprozent, um die Trocknung und die Farbstoffdiffusion nicht nachteilig zu beeinflussen. Mögliche Lösungsmittel sind beispielsweise wasserlösliche Alkohole, wasserlösliche Glykole, höhere Alkohole, Polyalkohole, Diglykole, Triglykole und Polyglykole sowie Monoether und Diether dieser Verbindungen sowie stickstoffhaltige Lösungsmittel wie Ethanolamin, Diethanolamin, Triethanolamin, 2-Pyrrolidon, Octylpyrrolidon, N-Methyl-pyrrolid-2-on oder 1,3-Di-methylimidazolid-2-on.

Die erfindungsgemässen Tinten enthalten weiter so genannte Feuchthalter. Feuchthalter sind organische, wasserlösliche Flüssigkeiten mit hohem Siedepunkt. Sie verhindern, dass die Tinte an den Düsen der Druckköpfe auch während ausgedehnter Druckpausen eintrocknet. Praktisch alle hochsiedenden Lösungsmittel des vorhergehenden Abschnitts können verwendet werden. Bevorzugt ist aber Glyzerin in Mengen bis 30 Gewichtsprozent bezogen auf die Gesamtmenge, besonders bevorzugt sind Mengen bis 15 Gewichtsprozent.

Den erfindungsgemässen Tinten können auch Metallchelatkomplexbildner zugesetzt werden. Diese Komplexbildner können in Mengen bis 0.5 Gewichtsprozent bezogen auf die Gesamtmenge in der Tinte enthalten sein, bevorzugt sind Mengen bis 0.3 Gewichtsprozent. Beispiele eines solchen Komplexbildners sind Ethylendiamintetraessigsäure und seine Salze.

Die erfindungsgemässen Tinten können weiter nichtionische und/oder anionische Netzmittel zur Einstellung der Oberflächenspannung enthalten, wenn nicht bereits durch die Anwesenheit der Lösungsmittel die Oberflächenspannung den nötigen Wert erreicht. Kationische Netzmittel können in der Regel nicht verwendet werden, weil sie mit den anionischen Farbstoffen Ausfällungen bilden. Die nichtionischen und/oder anionischen Netzmittel werden den Tinten vorteilhaft in Mengen bis 2 Gewichtsprozent zugesetzt, bevorzugt sind Mengen zwischen 0.1 Gewichtsprozent und 1.0 Gewichtsprozent.

Beispiele von nichtionischen Netzmitteln sind Surfynole (ethoxylierte Alkine), insbesondere Surfynol 465 (erhältlich bei Air Products and Chemicals, Allentown, USA); Tergitole (ethoxylierte Alkohole, erhältlich bei Dow Chemical Company, Midland, USA) und Olin 10 G (erhältlich bei Olin Corporation, Norwalk, USA).

Beispiele von anionischen Netzmitteln sind Aerosol OT (erhältlich bei Cytec Industries, West Paterson, USA); Triton X-200 (erhältlich bei Dow Chemical Company, Midland, USA) und Niaproof 04 (erhältlich bei Niacet Corporation, Niagara Falls, USA).

Die erfindungsgemässen Tinten enthalten weiter Biozide in Mengen bis 0.5 Gewichtsprozent, bevorzugt in Mengen zwischen 0.1 Gewichtsprozent und 0.3 Gewichtsprozent. Diese Biozide sind unerlässlich, damit die Tinten besonders in offenen Systemen stabil gegen Bakterien-, Hefe- oder Schimmelbefall sind. Von ihnen hängt die Lebensdauer sowie die Transport- und Lagerfähigkeit einer Tinte ab. Beispiele solcher Biozide sind Mergal 10 K N, erhältlich bei Troy Chemical Company, Florham Park, USA, und Proxel GXL, erhältlich bei Avecia, Manchester, Grossbritannien.

Die Gelbtinte, die Purpurtinte, die Blaugrüntinte und die Schwarztinte der erfindungsgemässen Tintensätze enthalten die Farbstoffe insgesamt je in einer Menge zwischen 0.1 Gewichtsprozent und 10 Gewichtsprozent bezogen auf das Gesamtgewicht jeder Tinte, bevorzugt je in einer Menge zwischen 2 Gewichtsprozent und 6 Gewichtsprozent bezogen auf das Gesamtgewicht jeder Tinte.

Die verwendeten Komponenten der erfindungsgemässen Purpurtinten (ausser Wasser und Farbstoff) sind in Tabelle 1 aufgeführt, bezogen auf das Gesamtgewicht der Tinte.

Tabelle 1

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |

Tabelle 1 (fortgesetzt)

| Komponente | Gewichtsprozent |
|---|---|
| Olin 10G (Netzmittel) | 0.1 |
| Surfynol 465 (Netzmittel) | 0.2 |
| Mergal K 10 N (Biozid) | 0.1 |

Die Zusammensetzung einer typischen Gelbtinte im erfindungsgemässen Tintensatz ist in Tabelle 2 aufgeführt.

Tabelle 2

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |
| Farbstoff "Gelb 1" | 2.5 |
| Wasser | 83.1 |

Der Farbstoff "Gelb 2" kann auch durch die Farbstoffe "Gelb 1", "Gelb 3" oder ein Gemisch dieser Farbstoffe ersetzt werden.

Die Zusammensetzung einer typischen Blaugrüntinte im erfindungsgemässen Tintensatz ist in Tabelle 3 aufgeführt.

Tabelle 3

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |
| Farbstoff "Direktblau 199" | 3.0 |
| Wasser | 82.6 |

Der Blaugrünfarbstoff Direktblau 199 kann auch durch andere geeignete Kupferphthalocyanin-Farbstoffe oder Gemische von Kupferphthalocyanin-Farbstoffen ersetzt werden.

Die Zusammensetzung einer typischen Schwarztinte im erfindungsgemässen Tintensatz ist in Tabelle 4 aufgeführt.

Tabelle 4

| Komponente | Gewichtsprozent |
|---|---|
| Ethylenglykol | 6.0 |

Tabelle 4 (fortgesetzt)

| Komponente | Gewichtsprozent |
|---|---|
| Propylenglykol | 3.0 |
| N-Methylpyrrolidon | 3.0 |
| Olin 10G (Netzmittel) | 0.1 |
| Surfynol 465 (Netzmittel) | 0.2 |
| Mergal K 10 N (Biozid) | 0.1 |
| Farbstoff "Schwarz 1" | 4.5 |
| Wasser | 83.1 |

Der Farbstoff "Schwarz 1" kann auch durch die Farbstoffe "Schwarz 2", Reaktivschwarz 31 oder ein Gemisch dieser Farbstoffe ersetzt werden.

Die vorliegende Erfindung wird durch die folgenden Beispiele näher beschrieben, ohne dass sie dadurch in irgendeiner Weise eingeschränkt würde.

**Bildherstellung**

Auf die Aufzeichnungsmaterialien IJP1.GP7 und DTN.GP9, beide erhältlich bei ILFORD Imaging Switzerland GmbH, Freiburg, Schweiz, IrisPRO Semi-Matte, erhältlich bei Creo Inc., Burnaby, Kanada, sowie HP Premium, erhältlich bei Hewlwt-Packard Company, Palo Alto, USA, wurden für die Bestimmung der Farbkoordinaten mit einem Tintenstrahldrucker Canon BJC 8500 mit den erfindungsgemässen Tinten zehnstufige Purpurfarbkeile gedruckt, wobei der Tintenauftrag von Stufe 1 (100 %) zu Stufe 10 (10 %) linear abnimmt.
IJP1.GP7 und IrisPRO Semi-Matte sind Aufzeichnungsmaterialien für den Tintenstrahldruck auf Polymerbasis, DTN. GP9 ist ein nanoporöses Aufzeichnungsmaterial, HP Premium ist ein beschichtetes Normalpapier.
Auf die Aufzeichnungsmaterialien IJP1.GP7, DTN.GP9, IrisPRO Semi-Matte und HP Premium wurden für die Bestimmung der Lichtbeständigkeit sowie der Aussenluft-Beständigkeit Purpurfarbfelder mit 95 % Tintenauftrag gedruckt.
Auf die Aufzeichnungsmaterialien IJP1.GP7, DTN.GP9, IrisPRO Semi-Matte und HP Premium wurden für die Bestimmung der Farbstoffdiffusion quadratische Farbfelder mit einer Fläche von 1 $cm^2$ gedruckt wurden, die ein fein abgestuftes Liniengitter aufweisen, bei dem die Quadrate eine Länge von 8 Pixeln und die Linien eine Breite von 2 Pixeln aufweisen. Die bedruckten Muster wurden 24 Stunden bei einer relativen Luftfeuchtigkeit von 59 % getrocknet. Anschliessend wurde die Farbstoffdiffusion an den bedruckten Mustern bestimmt.

**Prüfungen**

Auf den mit den erfindungsgemässen Gelbtinten bedruckten Aufzeichnungsmaterialien wurden die folgenden Eigenschaften bestimmt:

**Lichtbeständigkeit**

Die bedruckten Muster wurden in einem Atlas Ci35A Weather-O-Meter® mit einer 6500 W Xenon-Lampe so lange bestrahlt, bis 10 kJoule/$cm^2$ erreicht waren. Der Dichteunterschied der Muster vor und nach der Bestrahlung ist ein Mass für die Lichtbeständigkeit der Farbstoffe.

**Farbkoordinaten**

Die Farbkoordinaten (L*a*b*-Werte) an den bedruckten Mustern wurden mit Hilfe eines Spektrometers Spectrolino von Gretag AG, Regensdorf, Schweiz, gemessen.

**Farbstoffdiffusion**

Die optische Dichte der quadratischen Farbfelder wurde mit einem Densitometer Spectrolino™ der Firma Gretag Macbeth, Regensdorf, Schweiz gemessen. Anschliessend wurden die bedruckten Muster während 7 Tagen in einem Klimaschrank der Marke Heräus bei einer Temperatur von 40° C und einer relativen Feuchtigkeit von 80 % gelagert. Nach abgeschlossener Lagerung wurden die Muster erneut ausgemessen. Die Dichteunterschiede in Prozenten vor und nach der Lagerung sind ein Mass für das Ausmass der Farbstoffdiffusion. Eine Dichteerhöhung entspricht einer Farbstoffdiffusion, da die unbedruckten Bereiche im Gitter durch diffundierenden Farbstoff angefärbt werden und deshalb die integral gemessene Dichte ansteigt.

**Aussenluft-Beständigkeit**

Die optische Dichte der quadratischen Farbfelder wurde mit einem Densitometer Spectrolino™ der Firma Gretag Macbeth, Regensdorf, Schweiz gemessen. Anschliessend wurden die bedruckten Muster während 7 Tagen in einem Umluftschrank im Dunkeln bei einer Temperatur von 20° C und einer relativen Feuchtigkeit von 50 % gelagert. Nach abgeschlossener Lagerung wurden die Muster erneut ausgemessen. Die Dichteunterschiede in Prozenten vor und nach der Lagerung sind ein Mass für das Ausmass des Farbstoffverlusts im Dunkeln im Kontakt mit verunreinigter Aussenluft.

**Beispiele**

**Beispiel 1**

Die verwendeten Nicht-Farbstoff-Komponenten dieser Purpurtinten sind in Tabelle 5 aufgeführt, bezogen auf das Gesamtgewicht der Tinte.

Tabelle 5

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |

Olin 10G ist bei Olin Corporation, Norwalk, USA erhältlich, Surfynol 465 bei Air Products and Chemicals, Allentown, USA, und Mergal K 10 N bei Troy Chemical Company, Florham Park, USA.
Die Mengen der Purpurfarbstoffe wurden jeweils so angepasst, dass beim Druck etwa die gleiche Maximaldichte erhalten wurde. Die in den folgenden Tabellen angegebenen Gewichtsprozente beziehen sich auf die Gesamtmenge der in der Tinte vorhandenen Purpurfarbstoffe.
Das Mischungsverhältnis der verwendeten Purpurfarbstoffe ist in Tabelle 6 aufgeführt. Die Purpurtinte M-1.1 enthält einzig den Purpurfarbstoff "Reaktivrot 23", die Purpurtinte M-1.5 enthält einzig den Purpurfarbstoff "Purpur H1". Die Purpurtinten M-1.2, M-1.3 und M-1.4 enthalten je ein Gemisch dieser beiden Farbstoffe.

Tabelle 6

| Tinte | Anteil "Reaktivrot 23" (Gewichtsprozent) | Anteil "Purpur H1" (Gewichtsprozent) |
|---|---|---|
| M-1.1 | 100 | 0 |
| M-1.2 | 75 | 25 |
| M-1.3 | 50 | 50 |
| M-1.4 | 25 | 75 |
| M-1.5 | 0 | 100 |

**Beispiel 2**

In den Tinten von Beispiel 1 wurde der Farbstoff "Reaktivrot 23" durch den Farbstoff "Purpur K1" ersetzt. Das Mischungsverhältnis der verwendeten Purpurfarbstoffe ist in Tabelle 7 aufgeführt. Die Purpurtinte M-2.1 enthält

einzig den Purpurfarbstoff "Purpur K1", die Purpurtinte M-2.5 enthält einzig den Purpurfarbstoff "Purpur H1". Die Purpurtinten M-2.2, M-2.3 und M-2.4 enthalten je ein Gemisch dieser beiden Farbstoffe.

Tabelle 7

| Tinte | Anteil "Purpur K1" (Gewichtsprozent) | Anteil "Purpur H1" (Gewichtsprozent) |
|---|---|---|
| M-2.1 | 100 | 0 |
| M-2.2 | 75 | 25 |
| M-2.3 | 50 | 50 |
| M-2.4 | 25 | 75 |
| M-2.5 | 0 | 100 |

**Beispiel 3**

In den Tinten von Beispiel 1 wurde der Farbstoff "Reaktivrot 23" durch den Farbstoff "Purpur K2" und der Farbstoff "Purpur H1" durch den Farbstoff "Purpur H2" ersetzt.

Das Mischungsverhältnis der verwendeten Purpurfarbstoffe ist in Tabelle 8 aufgeführt. Die Purpurtinte M-3.1 enthält einzig den Purpurfarbstoff "Purpur K2", die Purpurtinte M-3.5 enthält einzig den Purpurfarbstoff "Purpur H2". Die Purpurtinten M-3.2, M-3.3 und M-3.4 enthalten je ein Gemisch dieser beiden Farbstoffe.

Tabelle 8

| Tinte | Anteil "Purpur K2" (Gewichtsprozent) | Anteil "Purpur H2" (Gewichtsprozent) |
|---|---|---|
| M-3.1 | 100 | 0 |
| M-3.2 | 75 | 25 |
| M-2.3 | 50 | 50 |
| M-2.4 | 25 | 75 |
| M-2.5 | 0 | 100 |

**Beispiel 4**

In den Tinten von Beispiel 1 wurde der Farbstoff "Reaktivrot 23" durch den Farbstoff "Purpur K3" und der Farbstoff "Purpur H1" durch den Farbstoff "Purpur H2" ersetzt.

Das Mischungsverhältnis der verwendeten Purpurfarbstoffe ist in Tabelle 9 aufgeführt. Die Purpurtinte M-4.1 enthält einzig den Purpurfarbstoff "Purpur K1", die Purpurtinte M-4.5 enthält einzig den Purpurfarbstoff "Purpur H2". Die Purpurtinten M-4.2, M-4.3 und M-4.4 enthalten je ein Gemisch dieser beiden Farbstoffe.

Tabelle 9

| Tinte | Anteil "Purpur K3" (Gewichtsprozent) | Anteil "Purpur H2" (Gewichtsprozent) |
|---|---|---|
| M-4.1 | 100 | 0 |
| M-4.2 | 75 | 25 |
| M-4.3 | 50 | 50 |
| M-4.4 | 25 | 75 |
| M-4.5 | 0 | 100 |

**Ergebnisse**

In Tabelle 10 sind die gemessenen L*a*b*-Werte der Maximaldichten der Tinten von Beispiel 1 auf dem Aufzeichnungsmaterial IJP1.GP7 zusammengestellt. Mass für die Brillanz ist das Chroma C, das folgendermassen definiert ist:

$$C = \sqrt{a^{*2} + b^{*2}}$$

Tabelle 10

| Tinte | L* | a* | b* | C |
|---|---|---|---|---|
| M-1.1 | 44.24 | 67.94 | -5.53 | 68 |
| M-1.2 | 44.55 | 70.77 | -6.93 | 71 |
| M-1.3 | 45.55 | 73.57 | -8.06 | 74 |
| M-1.4 | 46.67 | 76.87 | -9.06 | 77 |
| M-1.5 | 46.40 | 82.15 | -6.30 | 82 |

Die L*a*b*-Werte der Maximaldichten der Tinten von Beispiel 1 auf den anderen Aufzeichnungsmaterialien sind ähnlich.

In Tabelle 11 sind die gemessenen L*a* a*-Werte der Maximaldichten der Tinten von Beispiel 2 auf dem Aufzeichnungsmaterial IJP1.GP7 zusammengestellt.

Tabelle 11

| Tinte | L* | a* | b* | C |
|---|---|---|---|---|
| M-2.1 | 44.45 | 67.98 | -27.78 | 73 |
| M-2.2 | 45.62 | 70.47 | -24.87 | 75 |
| M-2.3 | 46.10 | 73.44 | -20.74 | 76 |
| M-2.4 | 46.14 | 77.75 | -16.02 | 79 |
| M-2.5 | 46.69 | 82.00 | -8.41 | 82 |

Die L*a*b*-Werte der Maximaldichten der Tinten von Beispiel 2 auf den anderen Aufzeichnungsmaterialien sind ähnlich.

In Tabelle 12 sind die gemessenen L*a* a*-Werte der Maximaldichten der Tinten von Beispiel 3 auf dem Aufzeichnungsmaterial IJP1.GP7 zusammengestellt.

Tabelle 12

| Tinte | L* | a* | b* | C |
|---|---|---|---|---|
| M-3.1 | 46.71 | 67.21 | -24.52 | 72 |
| M-3.2 | 45.62 | 71.11 | -18.67 | 74 |
| M-3.3 | 46.02 | 73.99 | -11.64 | 75 |
| M-3.4 | 46.94 | 77.28 | -3.17 | 77 |
| M-3.5 | 48.94 | 80.92 | 9.78 | 82 |

Die L*a*b*-Werte der Maximaldichten der Tinten von Beispiel 3 auf den anderen Aufzeichnungsmaterialien sind ähnlich.

In Tabelle 13 sind die gemessenen L*a* a*-Werte der Maximaldichten der Tinten von Beispiel 4 auf dem Aufzeichnungsmaterial IJP1.GP7 zusammengestellt.

Tabelle 13

| Tinte | L* | a* | b* | C |
|---|---|---|---|---|
| M-4.1 | 49.50 | 66.09 | -9.46 | 67 |
| M-4.2 | 48.29 | 70.63 | -7.25 | 71 |
| M-4.3 | 47.47 | 74.24 | -2.85 | 74 |

Tabelle 13 (fortgesetzt)

| Tinte | L* | a* | b* | C |
|---|---|---|---|---|
| M-4.4 | 47.90 | 77.76 | 1.99 | 78 |
| M-4.5 | 48.81 | 80.70 | 9.80 | 81 |

Die L*a*b*-Werte der Maximaldichten der Tinten von Beispiel 4 auf den anderen Aufzeichnungsmaterialien sind ähnlich.

Die Ergebnisse in den Tabellen 10 bis 13 zeigen, dass mit steigendem Anteil des H-Säurefarbstoffs die Brillanz (Chroma) deutlich zunimmt.

In Tabelle 14 sind die Ergebnisse der Lichtbeständigkeitsprüfung der Tinten von Beispiel 1 auf den Aufzeichnungsmaterialien DTN.GP9, JP1.GP7, IrisPRO Semi-Matte und HP zusammengestellt.

Tabelle 14

| | Prozentualer Dichteverlust | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-1.1 | 6 | 7 | 6 | 6 |
| M-1.2 | 9 | 12 | 12 | 9 |
| M-1.3 | 10 | 16 | 19 | 12 |
| M-1.4 | 11 | 22 | 26 | 14 |
| M-1.5 | 11 | 26 | 29 | 19 |

Die Ergebnisse in Tabelle 14 zeigen, dass die Lichtbeständigkeit von Purpurflächen mit den beiden Farbstoffen "Reaktivrot 23" und "Purpur H1" sowohl allein wie auch in ihren Mischungen besonders auf dem nanoporösen Aufzeichnungsmaterial DTN.GP9 sehr gut ist. Der höchste gemessene Dichteverlust von 29 % auf dem Aufzeichnungsmaterial PPSP6 entspricht einer Lebensdauer von 4 Jahren bei Raumbeleuchtung (500 Lux).

In Tabelle 15 sind die Ergebnisse der Lichtbeständigkeitsprüfung der Tinten von Beispiel 2 auf den Aufzeichnungsmaterialien DTN.GP9, JP1.GP7, IrisPRO Semi-Matte und HP Premium zusammengestellt.

Tabelle 15

| | Prozentualer Dichteverlust | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-2.1 | 10 | 8 | 16 | 7 |
| M-2.2 | 12 | 14 | 22 | 10 |
| M-2.3 | 12 | 20 | 25 | 13 |
| M-2.4 | 12 | 24 | 30 | 17 |
| M-2.5 | 10 | 27 | 29 | 19 |

Die Ergebnisse in Tabelle 15 zeigen, dass die Lichtbeständigkeit von Purpurflächen mit den beiden Farbstoffen "Purpur K1" und "Purpur H1" sowohl allein wie auch in ihren Mischungen besonders auf dem nanoporösen Aufzeichnungsmaterial DTN.GP9 sehr gut ist. Der höchste gemessene Dichteverlust von 30 % auf dem Aufzeichnungsmaterial PPSP6 entspricht einer Lebensdauer von 4 Jahren bei Raumbeleuchtung (500 Lux).

In Tabelle 16 sind die Ergebnisse der Lichtbeständigkeitsprüfung der Tinten von Beispiel 2 auf den Aufzeichnungsmaterialien DTN.GP9, JP1.GP7, IrisPRO Semi-Matte und HP Premium zusammengestellt.

Tabelle 16

| | Prozentualer Dichteverlust | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-2.1 | 10 | 8 | 16 | 7 |
| M-2.2 | 12 | 14 | 22 | 10 |
| M-2.3 | 12 | 20 | 25 | 13 |
| M-2.4 | 12 | 24 | 30 | 17 |
| M-2.5 | 10 | 27 | 29 | 19 |

Die Ergebnisse in Tabelle 16 zeigen, dass die Lichtbeständigkeit von Purpurflächen mit den beiden Farbstoffen "Purpur K1" und "Purpur H1" sowohl allein wie auch in ihren Mischungen besonders auf dem nanoporösen Aufzeichnungsmaterial DTN.GP9 sehr gut ist. Der höchste gemessene Dichteverlust von 30 % auf dem Aufzeichnungsmaterial PPSP6 entspricht einer Lebensdauer von 4 Jahren bei Raumbeleuchtung (500 Lux).

In Tabelle 17 sind die Ergebnisse der Lichtbeständigkeitsprüfung der Tinten von Beispiel 3 auf den Aufzeichnungsmaterialien DTN.GP9, JP1.GP7, IrisPRO Semi-Matte und HP Premium zusammengestellt.

Tabelle 17

| | Prozentualer Dichteverlust | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-3.1 | 5 | 4 | 5 | 4 |
| M-3.2 | 10 | 10 | 11 | 11 |
| M-3.3 | 10 | 16 | 14 | 17 |
| M-3.4 | 11 | 20 | 22 | 26 |
| M-3.5 | 11 | 24 | 27 | 35 |

Die Ergebnisse in Tabelle 17 zeigen, dass die Lichtbeständigkeit von Purpurflächen mit den beiden Farbstoffen "Purpur K2" und "Purpur H2" sowohl allein wie auch in ihren Mischungen besonders auf dem nanoporösen Aufzeichnungsmaterial DTN.GP9 sehr gut ist. Der höchste gemessene Dichteverlust von 35 % auf dem Aufzeichnungsmaterial HP Premium entspricht einer Lebensdauer von 3.5 Jahren bei Raumbeleuchtung (500 Lux).

In Tabelle 18 sind die Ergebnisse der Lichtbeständigkeitsprüfung der Tinten von Beispiel 4 auf den Aufzeichnungsmaterialien DTN.GP9, JP1.GP7, PPSP6 und HP Premium zusammengestellt.

Tabelle 18

| | Prozentualer Dichteverlust | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-4.1 | 2 | 8 | 13 | 2 |
| M-4.2 | 7 | 12 | 16 | 6 |
| M-4.3 | 7 | 15 | 17 | 11 |
| M-4.4 | 11 | 19 | 22 | 21 |
| M-4.5 | 13 | 20 | 23 | 30 |

Die Ergebnisse in Tabelle 18 zeigen, dass die Lichtbeständigkeit von Purpurflächen mit den beiden Farbstoffen "Purpur K3" und "Purpur H2" sowohl allein wie auch in ihren Mischungen besonders auf dem nanoporösen Aufzeichnungsmaterial DTN.GP9 sehr gut ist. Der höchste gemessene Dichteverlust von 30 % auf dem Aufzeichnungsmaterial HP Premium entspricht einer Lebensdauer von 4 Jahren bei Raumbeleuchtung (500 Lux).

In Tabelle 19 sind die Ergebnisse der Diffusionsprüfung der Tinten von Beispiel 2 auf den Aufzeichnungsmaterialien DTN.GP9, JP1.GP7, IrisPRO Semi-Matte und HP Premium zusammengestellt.

Tabelle 19

| | Prozentualer Dichteanstieg | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-2.1 | 8 | 2 | 3 | 0 |
| M-2.2 | 10 | 6 | 9 | -2 |
| M-2.3 | 9 | 7 | 3 | 3 |
| M-2.4 | 5 | 12 | 6 | 2 |
| M-2.5 | 2 | 11 | 1 | -2 |

Die Ergebnisse in Tabelle 19 zeigen, dass die beiden Farbstoffen "Purpur K1" und "Purpur H1" auf den vier Aufzeichnungsmaterialien ein unterschiedliches Diffusionsverhalten zeigen. Die Diffusion ist aber in allen Fällen genügend klein, so dass die Bilder auch in einer feuchten Atmosphäre aufbewahrt werden können.

In Tabelle 20 sind die Ergebnisse der Diffusionsprüfung der Tinten von Beispiel 3 auf den Aufzeichnungsmaterialien DTN.GP9, JP1.GP7, IrisPRO Semi-Matte und HP Premium zusammengestellt.

Tabelle 20

| | Prozentualer Dichteanstieg | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte Matte | Aufzeichnungsmaterial HP Premium |
| M-3.1 | 26 | 7 | 9 | 2 |
| M-3.2 | 16 | 4 | 9 | -2 |
| M-3.3 | 17 | 11 | 7 | 2 |
| M-3.4 | 14 | 9 | 6 | 0 |
| M-3.5 | 17 | 15 | 5 | 1 |

Die Ergebnisse in Tabelle 20 zeigen, dass die beiden Farbstoffen "Purpur K1" und "Purpur H1" auf den vier Aufzeichnungsmaterialien ein unterschiedliches Diffusionsverhalten zeigen. Die Diffusion ist aber für die Aufzeichnungsmaterialien JP1.GP7, IrisPRO Semi-Matte und HP Premium genügend klein, so dass die Bilder auch in einer feuchten Atmosphäre aufbewahrt werden können. Auf dem nanoporösen Aufzeichnungsmaterial DTN.GP9 wird das schlechte Diffusionsverhalten des Farbstoffs "Purpur K2" durch die Zumischung des Farbstoffs "Purpur H2" verbessert.

In Tabelle 21 sind die Ergebnisse der Diffusionsprüfung der Tinten von Beispiel 4 auf den Aufzeichnungsmaterialien DTN.GP9, JP1.GP7, IrisPRO Semi-Matte und HP Premium zusammengestellt.

Tabelle 21

| | Prozentualer Dichteanstieg | | | |
|---|---|---|---|---|
| Tinte | Aufzeichnungsmaterial DTN.GP9 | Aufzeichnungsmaterial IJP1.GP7 | Aufzeichnungsmaterial IrisPRO Semi-Matte | Aufzeichnungsmaterial HP Premium |
| M-4.1 | 18 | 7 | 12 | 2 |
| M-4.2 | 9 | 10 | 4 | 3 |
| M-4.3 | 23 | 10 | 1 | -2 |
| M-4.4 | 24 | 11 | 3 | 3 |
| M-4.5 | 17 | 17 | 3 | 3 |

Die Ergebnisse in Tabelle 21 zeigen, dass die beiden Farbstoffen "Purpur K1" und "Purpur H1" auf den vier Aufzeichnungsmaterialien ein unterschiedliches Diffusionsverhalten zeigen. Die Diffusion ist aber für die Aufzeichnungsmaterialien JP1.GP7, IrisPRO Semi-Matte und HP Premium genügend klein, so dass die Bilder auch in einer feuchten Atmosphäre aufbewahrt werden können. Auf dem nanoporösen Aufzeichnungsmaterial DTN.GP9 wird das schlechte Diffusionsverhalten des Farbstoffs "Purpur K3" durch die Zumischung des Farbstoffs "Purpur H2" verbessert.
In Tabelle 22 sind die Ergebnisse der Aussenluft-Beständigkeit der Tinten von Beispiel 1 auf dem Aufzeichnungsmaterial DTN.GP9 zusammengestellt.

Tabelle 22

| Tinte | Prozentualer Dichteverlust |
|---|---|
| | Aufzeichnungsmaterial DTN.GP9 |
| M-1.1 | 8 |
| M-1.2 | 5 |
| M-1.3 | 5 |
| M-1.4 | 3 |
| M-1.5 | 2 |

Die Ergebnisse in Tabelle 22 zeigen, dass der Zusatz des Farbstoffs "Reaktivrot 23" zum Farbstoff "Purpur H1" die Aussenluft-Beständigkeit verbessert
In Tabelle 23 sind die Ergebnisse der Aussenluft-Beständigkeit der Tinten von Beispiel 2 auf dem Aufzeichnungsmaterial DTN.GP9 zusammengestellt.

Tabelle 23

| Tinte | Prozentualer Dichteverlust |
|---|---|
| | Aufzeichnungsmaterial DTN.GP9 |
| M-2.1 | 5 |
| M-2.2 | 4 |
| M-2.3 | 3 |
| M-2.4 | 3 |
| M-2.5 | 2 |

Die Ergebnisse in Tabelle 23 zeigen, dass der Zusatz des Farbstoffs "Purpur K1 zum Farbstoff "Purpur H1" die Aussenluft-Beständigkeit verbessert.
In Tabelle 24 sind die Ergebnisse der Aussenluft-Beständigkeit der Tinten von Beispiel 3 auf dem Aufzeichnungsmaterial DTN.GP9 zusammengestellt.

Tabelle 24

| Tinte | Prozentualer Dichteverlust |
|---|---|
| | Aufzeichnungsmaterial DTN.GP9 |
| M-3.1 | 8 |
| M-3.2 | 7 |
| M-3.3 | 5 |
| M-3.4 | 3 |
| M-3.5 | 1 |

Die Ergebnisse in Tabelle 24 zeigen, dass der Zusatz des Farbstoffs "Purpur H2" zum Farbstoff "Purpur K2" die Aussenluft-Beständigkeit verbessert.
In Tabelle 25 sind die Ergebnisse der Aussenluft-Beständigkeit der Tinten von Beispiel 4 auf dem Aufzeichnungsmaterial DTN.GP9 zusammengestellt.

Tabelle 25

| Tinte | Prozentualer Dichteverlust |
|---|---|
| | Aufzeichnungsmaterial DTN.GP9 |
| M-4.1 | 2 |
| M-4.2 | 2 |
| M-4.3 | 1 |
| M-4.4 | 1 |
| M-4.5 | 1 |

Die Ergebnisse in Tabelle 25 zeigen, dass alle Mischungen der Farbstoffe "Purpur K3" und "Purpur H2" eine gute Aussenluft-Beständigkeit aufweisen.

Die Gesamtheit der Beispiele zeigt, dass mit dem Gemisch von H-Säurefarbstoffen und Kupferkomplex-Farbstoffen in den Purpurtinten Purpurfelder gedruckt werden können, die sowohl eine hohe Brillanz wie auch eine gute Lichtechtheit aufweisen.

Auf dem Aufzeichnungsmaterial IJP1.GP7 zeigen jeweils die Purpurtinten M-1.3, M-2.3, M-3.3 und M-4.3 den besten Kompromiss zwischen Brillanz (Chroma) und Lichtechtheit.

## Patentansprüche

1. Tintensatz für den Tintenstrahldruck bestehend aus mindestens einer Gelbtinte, mindestens einer Purpurtinte, mindestens einer Blaugrüntinte und mindestens einer Schwarztinte, **dadurch gekennzeichnet, dass** die Purpurtinte als erste Farbstoffkomponente mindestens einen Azofarbstoff der allgemeinen Formel (I)

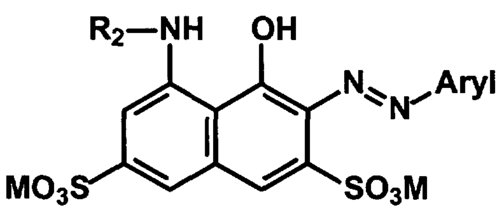

,

(I)

worin

M für Wasserstoff, ein Metallkation oder ein Ammoniumkation steht;

$R_2$ für $NHCOD_1$ steht, worin
$D_1$ unsubstituiertes oder substituiertes Alkyl, wobei die Substituenten aus der Gruppe bestehend aus $OCH_3$ und COOM ausgewählt werden; unsubstituiertes Phenyl oder mit $CH_3$, Cl, Br, OH oder COOM substituiertes Phenyl
oder
für $NHSO_2D_2$ steht, worin
$D_2$ unsubstituiertes Alkyl, unsubstituiertes Phenyl oder mit $CH_3$, F, Cl oder Br substituiertes Phenyl bedeutet

und

Aryl für unsubstituiertes Phenyl oder mit $CH_3$, Cl, Br, COOM oder $SO_3M$ substituiertes Phenyl oder unsubsti-

tuiertes Naphthyl oder mit COOM oder $SO_3M$ substituiertes Naphthyl steht,

oder
der allgemeinen Formel (II) enthält

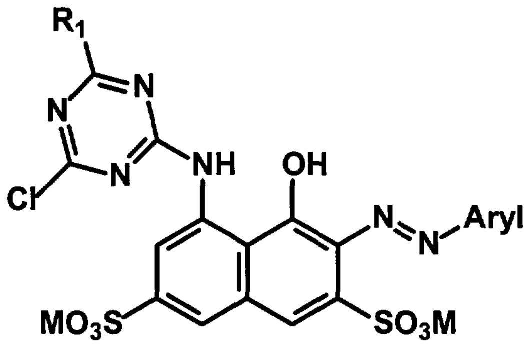

,

(II)

worin

M für Wasserstoff, ein Metallkation oder ein Ammoniumkation steht;
$R_1$ für $NR_3R_4$ steht, worin
$R_3$ und $R_4$ unabhängig voneinander fürwasserstoff; Alkyl, substituiertes Alkyl, wobei die Substituenten aus der Gruppe bestehend aus OH, $OCH_3$, COOM und $SO_3M$ ausgewählt werden; Aralkyl; unsubstituiertes Aryl oder substituiertes Aryl, wobei die Substituenten aus der Gruppe bestehend aus $OCH_3$, Cl, Br, COOM und $SO_3M$ ausgewählt werden; bedeuten,
oder
für $OR_5$ steht,
worin $R_5$ Wasserstoff oder Alkyl bedeutet
oder
für $SR_6$ steht, worin $R_6$ Alkyl oder mit COOM, OH oder $SO_3M$ substituiertes Alkyl bedeutet

und

Aryl für unsubstituiertes Phenyl oder mit $CH_3$, Cl, Br, COOM oder $SO_3M$ substituiertes Phenyl oder für unsubstituiertes Naphthyl oder mit COOM oder $SO_3M$ substituiertes Naphthyl steht,

und
als zweite Farbstoffkomponente mindestens einen Kupferkomplex-Azofarbstoff der allgemeinen Formel (III)

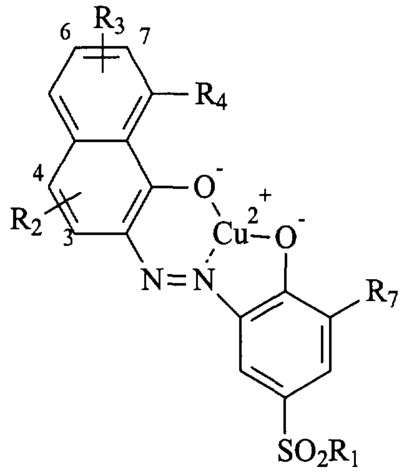

(III)

oder der allgemeinen Formel (IV) enthält,

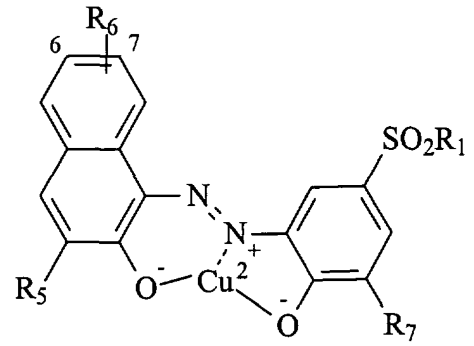

(IV)

worin

M für Wasserstoff, ein Metallkation oder ein gegebenenfalls substituiertes Ammoniumkation steht;

$R_1$ für Alkyl mit 1 bis 4 Kohlenstoffatomen, substituiertes Alkyl mit 2 bis 4 Kohlenstoffatomen, wobei die Substituenten aus der Gruppe bestehend aus OH und $OSO_3$ ausgewählt werden; oder Alkenyl mit 2 bis 4 Kohlenstoffatomen steht;

$R_2$ für Wasserstoff oder $SO_3M$ steht;

$R_3$ für Wasserstoff, $SO_3M$, $NH_2$, $NHCOD_1$, wobei $D_1$ unsubstituiertes oder substituiertes Alkyl mit 1 bis 6 Kohlenstoffatomen, wobei die Substituenten aus der Gruppe bestehend aus COOM, Cl und Br ausgewählt werden, bedeutet; unsubstituiertes Phenyl oder mit $CH_3$, Cl, Br, OH, COOM oder $SO_3M$ substituiertes Phenyl oder $NHSO_2D_2$, steht, wobei $D_2$ unsubstituiertes Alkyl mit 1 bis 6 Kohlenstoffatomen, unsubstituiertes Phenyl oder mit $CH_3$, F, Cl oder Br substituiertes Phenyl bedeutet;

$R_4$ für Wasserstoff, $SO_3M$, $NH_2$, $NHSO_2D_3$, wobei $D_3$ Alkyl mit 1 bis 6 Kohlenstoffatomen bedeutet; unsubstituiertes Phenyl oder mit $CH_3$, F, Cl oder Br substituiertes Phenyl steht;

$R_5$ für Wasserstoff, $SO_3M$, COOM oder $COND_4D_5$ steht, wobei $D_4$ und $D_5$ unabhängig voneinander Wasserstoff, unsubstituiertes oder substituiertes Alkyl mit 1 bis 6 Kohlenstoffatomen, wobei die Substituenten aus der Gruppe bestehend aus $OCH_3$, $OC_2H_5$, iso-$OC_3H_7$ und OH ausgewählt werden; bedeuten;

$R_6$ für Wasserstoff oder $SO_3M$ steht

und

$R_7$ für Wasserstoff oder $SO_3M$ steht.

2. Tintensatz gemäss Anspruch 1, **dadurch gekennzeichnet, dass** das Verhältnis der Azofarbstoffe der allgemeinen Formeln (I) oder (II) und der Kupferkomplex-Azofarbstoffe der allgemeinen Formeln (III) oder (IV) in der Purpurtinte zwischen 1 : 100 Gewichtsprozent und 100 : 1 Gewichtsprozent liegt.

3. Tintensatz gemäss den Ansprüchen 1 und 2, **dadurch gekennzeichnet, dass** als Farbstoffe der allgemeinen Formeln (I) und (II) der Farbstoff "Purpur H1" der Formel

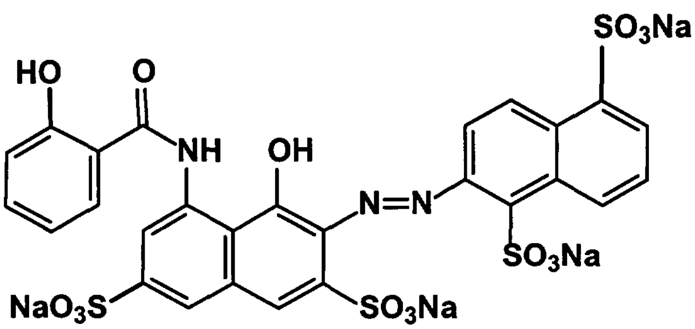

,

Purpur H1

oder der Farbstoff "Purpur H2" der Formel

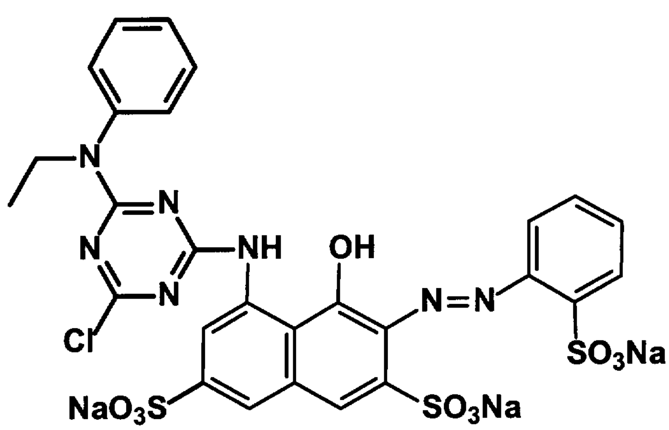

Purpur H2

oder ein Gemisch dieser Farbstoffe
und
als Kupferkomplex-Farbstoffe der allgemeinen Formeln (III) und (IV) der Farbstoff "Purpur K1" der Formel

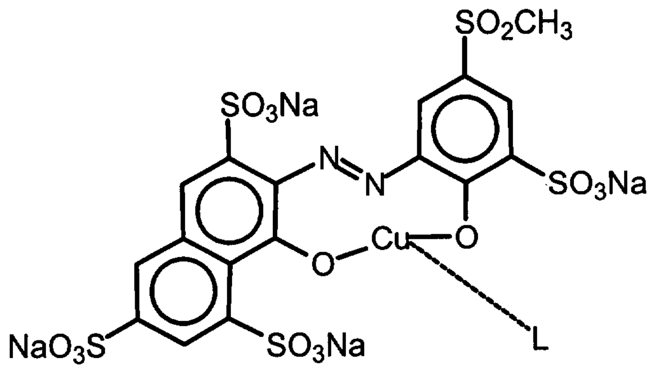

,

Purpur K1

der Farbstoff "Purpur K2" der Formel

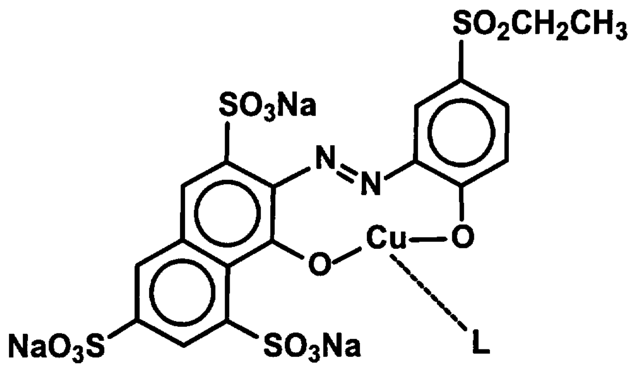

,

Purpur K2

der Farbstoff "Purpur K3" der Formel

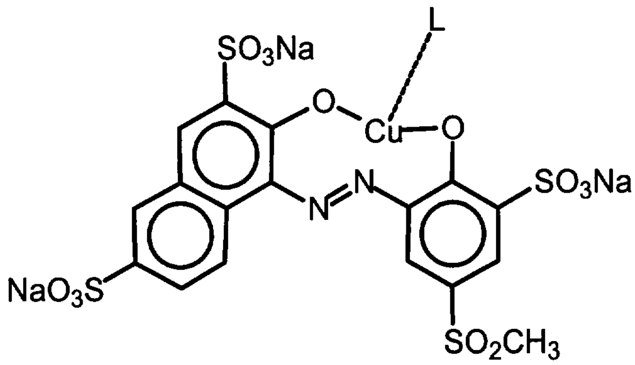

,

Purpur K3

der Farbstoff "Purpur K4" der Formel

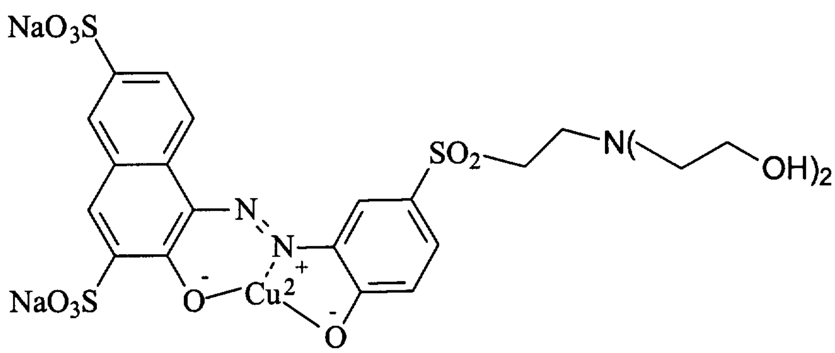

Purpur K4

sowie der Farbstoff "Reaktivrot 23" der Formel

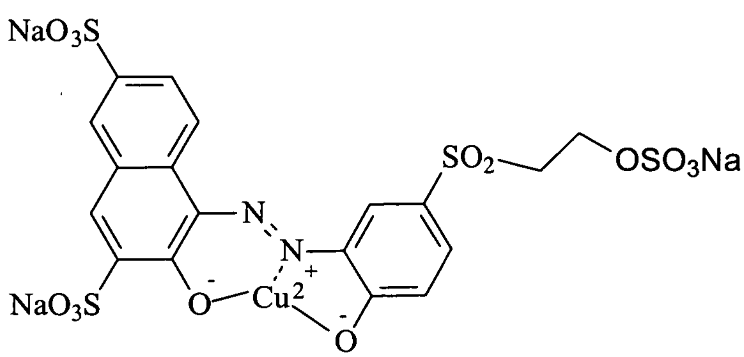

Reaktivrot 23

oder ein Gemisch dieser Farbstoffe verwendet wird, worin L einen Kupferliganden wie beispielsweise 2-Aminoethanol bedeutet.

4. Tintensatz nach Anspruch 1, **dadurch gekennzeichnet, dass** die Gelbtinte mindestens einen Farbstoff der allgemeinen Formel (V)

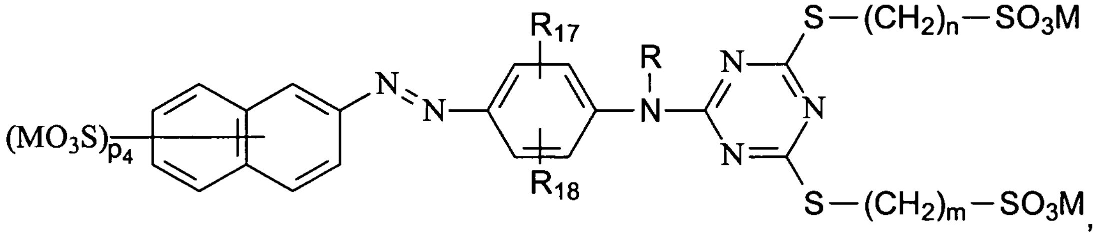

(V)

worin

| | |
|---|---|
| R | für Wasserstoff oder Alkyl mit 1 bis 6 Kohlenstoffatomen steht; |
| M | für Wasserstoff, ein Metallkation oder ein gegebenenfalls substituiertes Ammoniumkation steht; |
| $R_{17}$, $R_{18}$ | unabhängig voneinander für Wasserstoff, Alkyl oder Alkoxyl mit jeweils 1 bis 3 Kohlenstoffatomen stehen; |
| $p_4$ | einen Wert zwischen 1 und 3 annimmt und die $SO_3M$-Gruppe in Stellung 1, 4, 5, 6, 7 oder 8 steht, wenn $p_4$ den Wert 1 hat; die $SO_3M$-Gruppen in den Stellungen 4 und 8, 5 und 7, 6 und 8 oder 1 und 5 stehen, wenn $p_4$ den Wert 2 hat; oder die $SO_3M$-Gruppen in den Stellungen 3, 6 und 8 oder 4, 6 und 8 stehen, wenn $p_4$ den Wert 3 hat |

und

n, m unabhängig voneinander einen Wert zwischen 2 und 6 annehmen,

oder der allgemeinen Formel (VI)

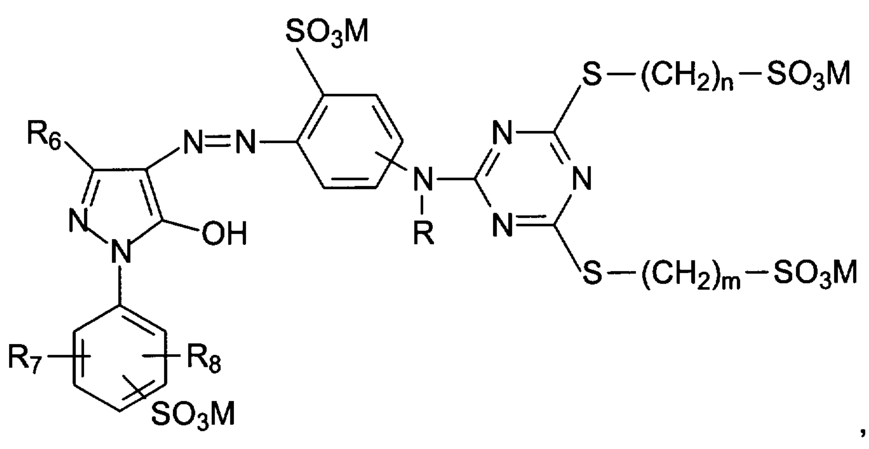

,

(VI)

worin

R für Wasserstoff oder Alkyl mit 1 bis 6 Kohlenstoffatomen steht;
M für Wasserstoff oder ein Metallkation oder ein gegebenenfalls substituiertes Ammoniumkation steht;
$R_6$ für $CH_3$ oder COOM steht;
$R_7$, $R_8$ unabhängig voneinander für Wasserstoff, Cl, Br oder $CH_3$ stehen

und

n, m unabhängig voneinander einen Wert zwischen 2 und 6 annehmen,

oder ein Gemisch dieser Farbstoffe enthält.

**5.** Tintensatz gemäss Anspruch 4, **dadurch gekennzeichnet, dass** als Farbstoffe der allgemeinen Formeln (V) oder (VI) der Farbstoff "Gelb 1"

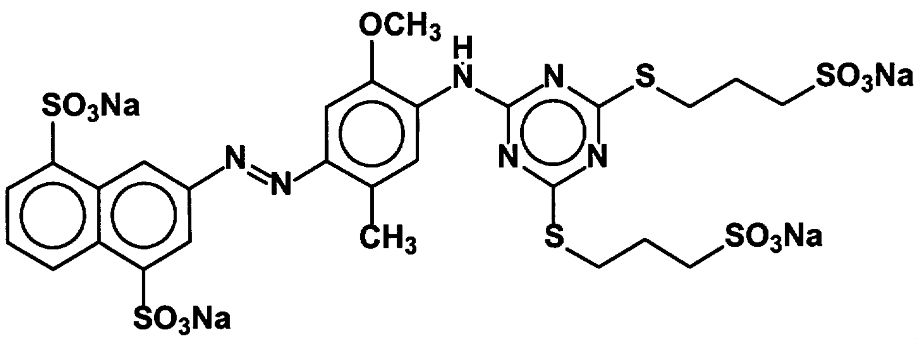

,

Gelb 1

der Farbstoff "Gelb 2"

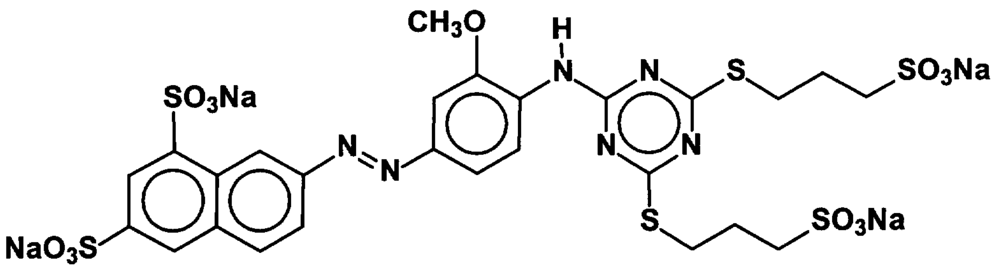

,

Gelb 2

der Farbstoff "Gelb 3"

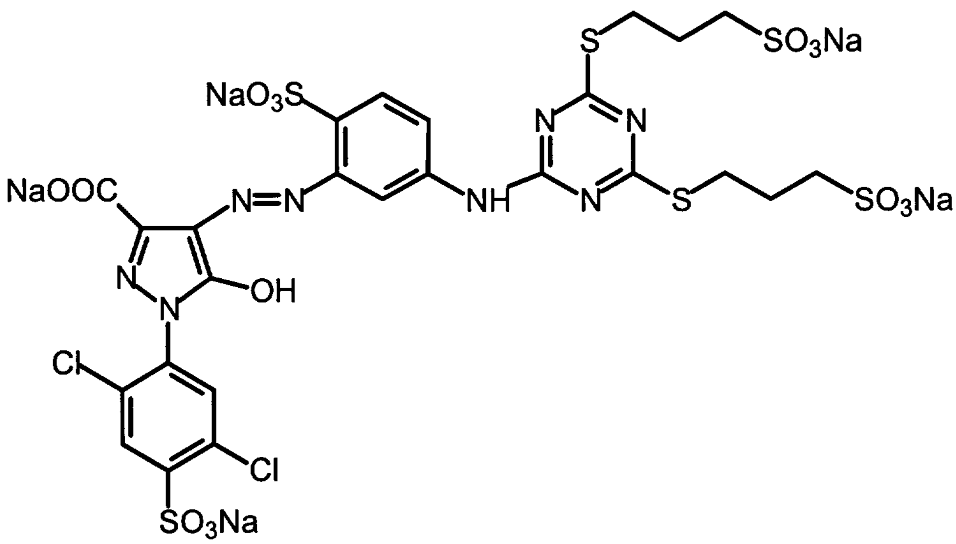

Gelb 3

oder ein Gemisch dieser Farbstoffe verwendet wird.

6. Tintensatz gemäss Anspruch 1, **dadurch gekennzeichnet, dass** die Blaugrüntinte als Blaugrünfarbstoff mindestens einen Kupferphthalocyanin-Farbstoff enthält.

7. Tintensatz gemäss Anspruch 6, **dadurch gekennzeichnet, dass** als Blaugrünfarbstoff der Farbstoff "Direktblau 199" der Formel

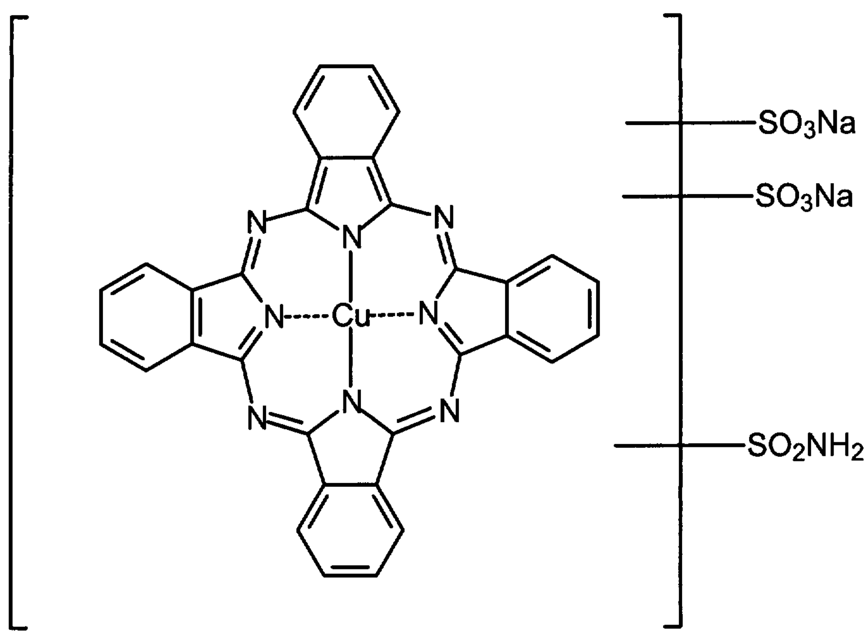

Direktblau 199

verwendet wird.

**8.** Tintensatz nach Anspruch 1, **dadurch gekennzeichnet, dass** in der Schwarztinte der Farbstoff "Schwarz 1" der Formel

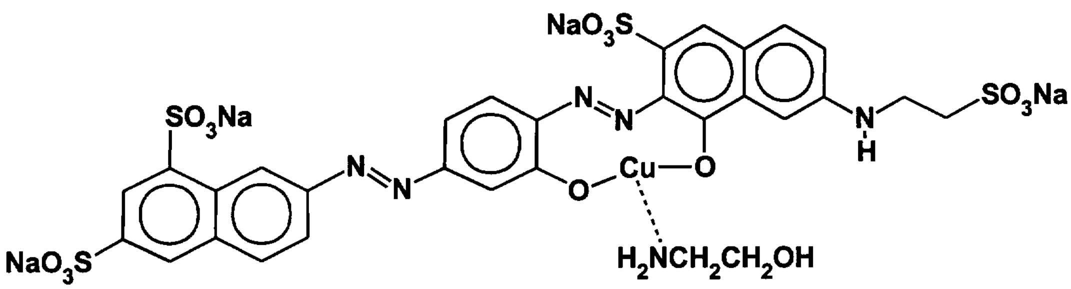

,

Schwarz 1

der Farbstoff "Schwarz 2" der Formel

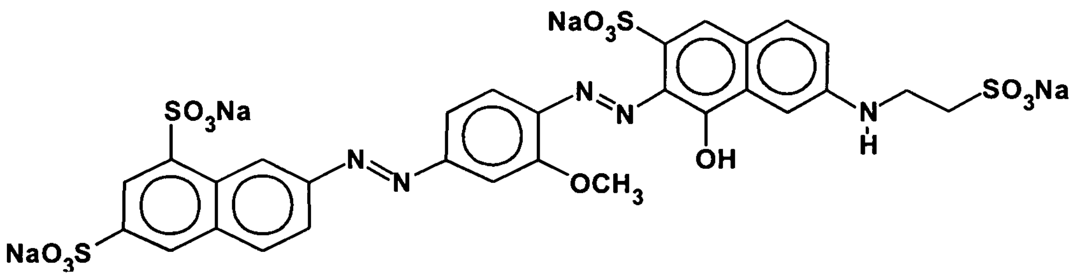

,

Schwarz 2

der Farbstoff "Reaktivschwarz 31"

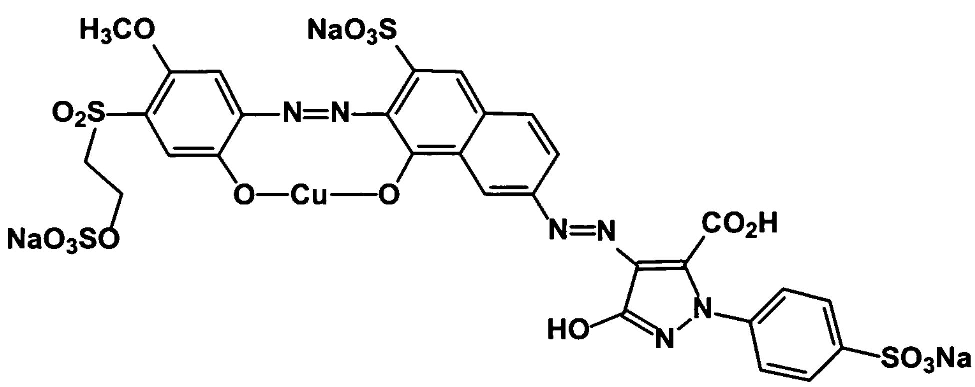

Reaktivschwarz 31

oder ein Gemisch dieser Farbstoffe verwendet wird.

9. Tintensatz nach Anspruch 1, **dadurch gekennzeichnet, dass** die Gelbtinte, die Purpurtinte, die Blaugrüntinte und die Schwarztinte die Farbstoffe insgesamt je in einer Menge zwischen 0.1 Gewichtsprozent und 10 Gewichtsprozent bezogen auf das Gesamtgewicht jeder Tinte enthalten.

10. Tintensatz für den Tintenstrahldruck, **dadurch gekennzeichnet, dass** der Tintensatz als Gelbtinte eine Tinte gemäss Anspruch 5, als Purpurtinte eine Tinte gemäss Anspruch 3, als Blaugrüntinte eine Tinte gemäss Anspruch 7 und als Schwarztinte eine Tinte gemäss Anspruch 8 enthält.

Europäisches Patentamt

# EUROPÄISCHER RECHERCHENBERICHT

Nummer der Anmeldung
EP 04 40 5184

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 366 121 A (CANON KK)<br>2. Mai 1990 (1990-05-02)<br>* Seite 3, Zeile 9 - Zeile 33 * | 1,2 | C09D11/00 |
| D,X | EP 1 086 999 A (CIBA SC HOLDING AG)<br>28. März 2001 (2001-03-28)<br>* Absatz [0066] *<br>* Absatz [0087] * | 1,2 | |
| Y | * Absatz [0098] *<br>* Absatz [0100] * | 3 | |
| Y | US 6 320 031 B1 (K. BAETTIG ET AL)<br>20. November 2001 (2001-11-20) | 3-5,8-10 | |
| X | * Spalte 5, Zeile 8 - Zeile 58 * | 1,2,6,7 | |
| D,Y | EP 0 755 984 A (ILFORD AG)<br>29. Januar 1997 (1997-01-29)<br>* Seite 4, Zeile 35 - Zeile 50 * | 4,5 | |
| Y | EP 0 982 371 A (ILFORD IMAGING CH GMBH)<br>1. März 2000 (2000-03-01)<br>* Beispiele 1,dye,19 * | 8-10 | |

RECHERCHIERTE SACHGEBIETE (Int.Cl.7)
C09D

Der vorliegende Recherchenbericht wurde für alle Patentansprüche erstellt

| Recherchenort | Abschlußdatum der Recherche | Prüfer |
|---|---|---|
| Den Haag | 30. August 2004 | Matthijssen, J-J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes Dokument

3

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 04 40 5184

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0366121 | A | 02-05-1990 | JP | 2191683 | A | 27-07-1990 |
| | | | AT | 101868 | T | 15-03-1994 |
| | | | DE | 68913264 | D1 | 31-03-1994 |
| | | | DE | 68913264 | T2 | 04-08-1994 |
| | | | EP | 0366121 | A2 | 02-05-1990 |
| | | | US | 5074914 | A | 24-12-1991 |
| EP 1086999 | A | 28-03-2001 | DE | 50000718 | D1 | 12-12-2002 |
| | | | EP | 1086999 | A2 | 28-03-2001 |
| | | | ES | 2185549 | T3 | 01-05-2003 |
| | | | JP | 2001152062 | A | 05-06-2001 |
| | | | US | 6521032 | B1 | 18-02-2003 |
| US 6320031 | B1 | 20-11-2001 | EP | 1031614 | A1 | 30-08-2000 |
| | | | DE | 59903965 | D1 | 13-02-2003 |
| EP 0755984 | A | 29-01-1997 | DE | 69600265 | D1 | 04-06-1998 |
| | | | DE | 69600265 | T2 | 03-12-1998 |
| | | | EP | 0755984 | A1 | 29-01-1997 |
| | | | JP | 9217018 | A | 19-08-1997 |
| | | | US | 5721344 | A | 24-02-1998 |
| | | | US | 5844100 | A | 01-12-1998 |
| EP 0982371 | A | 01-03-2000 | EP | 0982371 | A1 | 01-03-2000 |
| | | | DE | 69801818 | D1 | 31-10-2001 |
| | | | DE | 69801818 | T2 | 11-04-2002 |
| | | | US | 6302949 | B1 | 16-10-2001 |

EPO FORM P0461

Für nähere Einzelheiten zu diesem Anhang : siehe Amtsblatt des Europäischen Patentamts, Nr.12/82